# EUROPÄISCHE PATENTANMELDUNG

(11) **EP 1 074 666 A2**
(43) Veröffentlichungstag der Anmeldung: **07.02.2001**
(21) Anmeldenummer: 00115886.4
(22) Anmeldetag: 25.07.2000
(51) Int. Cl.: E04B 1/38, B27M 3/00, F16B 1/00

(54) **Verbindungselement für zumindest zum Teil aus Holz bestehende Bauelemente**

(30) Priorität: 26.07.1999 AT 128599; 19.06.2000 AT 10562000
(71) Anmelder: WIESNER-HAGER BAUGRUPPE GES.M.B.H., 4950 Altheim (AT)
(72) Erfinder: Stache, Michael, Dipl.-Ing., 84375 Kirchdorf am Inn (DE); Hochreiner, Georg, Dipl.-Ing., 4950 Altheim (AT)
(74) Vertreter: Secklehner, Günter, Dr.

(57) **Zusammenfassung**

Die Erfindung betrifft ein Verbindungselement (2) und ein Verfahren zum Verbinden mehrerer Bauelemente (1), von welchen zumindest einer zum Teil aus Holz besteht, bei welchen in einem Verbindungsbereich (4) zumindest eine nutartige Vertiefung (7) mit zumindest schräg zum Faserverlauf bzw. Faserrichtung verlaufenden Seitenflächen (10) hergestellt wird, worauf die beiden Bauelemente (1) in ihrer gewünschten Lage zueinander ausgerichtet und verbunden werden. Die nutartige Vertiefung (7) ist in ihrer Längsrichtung im Bereich von Schmalseiten des Bauelementes (1) durch Öffnungen begrenzt, die zumindest teilweise verschlossen werden und wenigstens ein gemeinsames Bauelement (1) bilden, wobei ein Hohlraum (13) mit Material zur Herstellung zumindest eines Verbindungselementes (2) gefüllt wird, welches gleichzeitig über Anformung an und/oder Eindringen in die Oberfläche der Vertiefung (7) der Bauelemente (1) und/oder eine Oberfläche eines Vorsprunges und eines Anschlußteiles während der Herstellung des Verbindungselementes (2) mit den Bauelementen (1) kraft- und/oder formschlüssig verbunden wird.

## Beschreibung

Die Erfindung betrifft ein Verfahren zum Verbinden mehrerer Bauelemente, wie es in den Oberbegriffen der Ansprüche 1, 51, 56 und 58 angegeben ist, ein Verbindungselement, wie im Oberbegriff des Anspruches 32 beschrieben, ein einstückiges Bauteil, wie im Oberbegriff des Anspruches 48 beschrieben, eine Verwendung für die Herstellung eines Verbindungselementes, wie im Anspruch 49 beschrieben und eine Verbindung mehrerer Holzbauteile, wie in den Oberbegriffen der Ansprüche 50 und 52 beschrieben.

Um zwischen Stiel und Riegel von Gelenkrahmen aus Brettschichthölzern beispielsweise einer Hallenkonstruktion eine biegesteife Rahmenecke zu erhalten, werden häufig Keilzinkenverbindungen eingesetzt, die jedoch eines vergleichsweise hohen Herstellungsaufwandes bedürfen. Es müssen nämlich nicht nur entsprechende Temperatur- und Feuchtigkeitsverhältnisse, sondern auch bestimmte Verklebungsbedingungen eingehalten werden. So sollen beispielsweise die durch die Zinkenflanken gebildeten Fügeflächen für den zweiseitigen Klebstoffauftrag sauber und unbeschädigt sein. Außerdem ist für einen gleichmäßigen, vergleichsweise hohen Preßdruck zu sorgen, der zumindest so lange aufrechterhalten werden soll, bis kein sichtbarer Klebstoff mehr aus den Fugen austritt. Danach dürfen die keilgezinkten Holzbauteile nicht bewegt werden, bis der Klebstoff ausreichend ausgehärtet ist. Diese Forderungen lassen sich im allgemeinen nur unter werkstattmäßigen Bedingungen erfüllen, was dazu führt, daß trotz der damit verbundenen, erschwerten Transportbedingungen die Rahmen vorgefertigt werden und nicht erst auf der Baustelle aus einzelnen Holzbauteilen mit entsprechend profilierten Enden zusammengefügt werden. Dies gilt selbstverständlich nicht nur für Keilzinkenverbindungen, sondern auch für Schäftungen, also für alle Verbindungen von Holzbauteilen, die an ihren zu verbindenden Enden eine Profilierung mit einander gegenüberliegenden, unter einem vorgegebenen Flankenwinkel geneigten Fügeflächen zum Auftragen der Klebstoffschicht aufweisen.

Aus der DE 29 15 417 A1 ist ein Verfahren zum Verbinden mehrerer aus Holz bestehender Bauelemente bekannt, bei welchem die aufeinanderstoßenden Stirnseiten der Bauelemente mit Vertiefungen versehen werden, in welche ein flüssiger aushärtbarer Kunststoff, vorzugsweise ein Kunstharz, eingebracht wird. Derartige Verbindungen weisen nur kleine wirksame Fügeflächen an den Bauelementen auf, wodurch diese nur geringen Belastungen ausgesetzt werden können und daher das Anwendungsgebiet derartiger Verbindungen stark eingeschränkt wird.

Weiters ist aus der EP 0 617 203 A1 ein Verfahren zum Verbinden mehrerer Bauteile bekannt, die an ihren zu verbindenden Enden eine in Längserstreckung der Bauelemente gerichtete Profilierung aufweisen, die durch mehrere zueinander parallel verlaufende schlitzförmige, insbesondere nutartige Vertiefungen mit parallel zur Faserrichtung verlaufenden Seitenflächen gebildet wird, deren aufeinander zugewandten Enden mit einem dünnwandigen und ebenflächigen, in die nutartigen Vertiefungen ragenden Verstärkungselemente ausgestattet werden, worauf in den zwischen den Verstärkungselementen und den Seitenflächen gebildeten Hohlraum ein aushärtbares Material eingebracht und dadurch ein einstückiger Bauteil gebildet wird. Derartige, mit einem hohen Herstellungsaufwand verbundene Bauelementeverbindungen weisen aufgrund der zumindest bereichsweise mit dem Faserverlauf deckungsgleich verlaufenden nutartigen Vertiefungen nur eine eingeschränkte Tragfähigkeit auf.

Eine Verbindung von mehreren zueinander ausgerichteten Bauelementen ist aus der DE 37 06 710 A1 bekannt, deren miteinander zu verbindende, insbesondere zu verleimende Stirnseiten mehrere zueinander parallel ineinandergreifende Rillen aufweist, deren Profilierung in der Stirnseite in Form einer periodisch sich wiederholenden stetigen Kurve verläuft. Derartige Verbindungen von Bauelementen erfordern für den zweiseitigen Klebstoffauftrag saubere und unbeschädigte einander zu verbindende Fügeflächen, wobei nach dem Anbringen einer Klebstoffschicht die Bauelemente über längere Zeitdauer zueinander verpreßt werden müssen, bis die Klebstoffschicht ausreichend ausgehärtet ist. Außerdem sind während der Herstellung der Klebstoffschicht bestimmte Temperatur- und Feuchtigkeitsverhältnisse erforderlich, die im allgemeinen nur in einer Werkstatt erfüllbar sind.

Des weiteren ist in der FR 2 546 439 A1 eine Verbindung mehrerer Bauelemente, insbesondere einer Nut-Feder-Verbindung von durch Holzlamellen gebildeten Holzbauteilen geoffenbart, bei der wenigstens eine die Holzlamellen in der Plattenebene durchsetzende, fluchtende Durchgangsausnehmung angeordnet ist, die mit einer Vergußmasse, insbesondere Kunstharz, ausgefüllt wird. Eine derartige, eine Vielzahl von Einzelbauelementen aufweisende Verbindung ist nur für kleine, quer zu Faserrichtung der Holzbauteile einwirkende Belastungen einsetzbar, wobei eine geringfügige Anhebung der Tragfestigkeit ausschließlich durch zusätzliches Anbringen von in Richtung der Verbindung der Bauelemente orientierte weitere Bauelemente möglich ist. Dies führt zu einem Mehraufwand in der Fertigung, zu einer Erhöhung der Fertigungskosten etc. Außerdem sind derartige Verbindungen im allgemeinen nur unter werkstattmäßigen Bedingungen herstellbar, da diese in Ausricht- und Preßvorrichtungen miteinander zu verbinden sind.

Aus der EP 0 340 598 A2 ist weiters eine Verbindung mehrerer zueinander ausgerichteter Bauelemente, insbesondere ein Plattenbelag, bekannt, der im zusammengefügten Zustand eine flüssigkeitsdichte und/oder säure- bzw. laugenfeste Boden- und/oder Wandauskleidung bildet. Die Bauelemente weisen bevorzugt einen mehreckigen Umriß mit im wesentlichen senkrecht zur Schmalseite verlaufenden Seitenflächen auf, denen eine Vielzahl von direkt nebeneinander angeordneten Vertiefungen bzw. Vorsprüngen zugeordnet ist, welche im Verbindungsbereich zu einem weiteren gegengleich ausgebildeten Bauelement positioniert werden, wobei die durch die Vertiefungen bzw. Vorsprünge gebildeten Hohlräume mit einer Klebemasse flüssigkeitsdicht miteinander verbunden werden. Ein derartiger, aus mehreren Bauelementen zusammengesetzter Plattenbelag, bei welchem die Vertiefungen nur unter einem hohen maschinellen und werkzeugtechnischen Aufwand erstellbar sind, kann im Verbindungsbereich nur einer geringen Belastung ausgesetzt werden.

Aufgabe der Erfindung ist es nunmehr, ein hoch belastbares kraftübertragendes und/oder positives und/oder negatives momentenübertragendes Verbindungselement zwischen mehreren Bauelementen zu schaffen. Darüber hinaus soll die Verbindung zweckmäßig ohne großen maschinellen Aufwand auch auf der Baustelle unter gegebenen Umgebungsbedingungen herstellbar sein, ohne Festigkeitsverluste befürchten zu müssen.

Die Aufgabe der Erfindung wird durch die im Kennzeichenteil des Anspruches 1 angeführten Maßnahmen gelöst. Der überraschende Vorteil dabei ist, daß die in der Werkstatt vorgefertigten, voneinander getrennten Bauelemente und/oder eine aus mehreren Bauelementen zusammengesetzte Baueinheit ohne infrastrukturbedingte Einschränkungen auf einer Baustelle zugestellt werden können, wo die Endmontage bzw. die Verbindungsherstellung mehrerer z.B. einen Gelenkrahmen für eine Hallenkonstruktion bildender Bauelemente erfolgt. Die im Baustellenbereich bereitgestellten, einfach aufgebauten Vorrichtungen zur Ausrichtung und gegebenenfalls zum Fixieren der Bauelemente positionieren die ausgerichteten Bauelemente in deren gewünschten Lage, worauf unter den vor Ort vorherrschenden Klimabedingungen das Fertigungstoleranzen und/oder Risse ausgleichende Material für das Verbindungselement eingebracht wird, welches ohne zusätzliche klimatisierte Preßeinrichtungen innerhalb kürzester Zeit Großteils aushärtet, sodaß das Bauelement bereits nach Erreichen von etwa 50% seiner vollständigen Aushärtung als solches montiert werden kann, ohne daß eine Gefahr des Bruches etc. der miteinander verbundenen Bauelemente besteht. Das für das Verbindungselement verwendete Material benötigt keine vollständige Aushärtung, wodurch bereits nach dem bereichsweisen Aushärten des Materials eine tragfähige Verbindung zwischen dem Verbindungselement und den Bauelementen vorhanden ist, worauf unmittelbar nach dem Herstellen des Verbindungselementes mit dem Errichten einer Hallenkonstruktion begonnen werden kann. Dadurch kann einerseits ein kostenintensiver, hoher maschineller und werkzeugtechnischer Aufwand für Preßvorrichtungen und dgl. vermieden werden und andererseits ist eine erhebliche Verkürzung der Bauzeit möglich.

Bei einem Vorgehen nach den Ansprüchen 2 und 3 ist vorteilhaft, daß ein bevorzugt vorgefertigtes Verstärkungselement vor dem Einbringen des Materials für das Verbindungselement angeordnet wird, wodurch die Menge des in den Hohlraum einzubringenden Materials gezielt dosierbar ist und gegebenenfalls Verschmutzungen vermeidbar sind.

Die Maßnahme nach Anspruch 4 erlaubt mit Vorteil eine erhebliche Querzugsverstärkung trotz kleiner platzsparender Bauweise des Verbindungselementes.

Ein Vorgehen nach Anspruch 5 ist vorteilhaft, da durch die zumindest bereichsweise Überlappung der Stirnseiten eine dichtende Verbindung hergestellt wird, wodurch der Aufwand für das Verschließen des durch die Bauelemente nur zum Teil verschließenden Hohlraumes verringert wird.

Eine vorteilhafte Maßnahme nach Anspruch 6 ermöglicht das gegenseitige Abstützen der Bauelemente, sodaß die Verbindung einer größeren Belastung ausgesetzt werden kann.

Eine vorteilhafte Maßnahme nach Anspruch 7 ermöglicht das rasche Einbringen des flüssigen oder pastösen Materials, wodurch der Zeitaufwand für die Herstellung eines Verbindungselementes und die damit verbundenen Fertigungskosten erheblich reduziert werden. Des weiteren können Fertigungstoleranzen ausgeglichen werden.

Vorteilhaft ist auch ein Maßnahme nach Anspruch 8, weil durch die Druckdifferenz zwischen dem Umgebungsdruck und dem im Hohlraum vorherrschenden Innendruck eine Saugwirkung aufgebaut wird, wodurch das Einbringen des Materials, beispielsweise über Injektionsnadeln, Angußbohrungen und dgl., bei entsprechender Druckdifferenz selbsttätig von statten geht.

Eine weitere vorteilhafte Vorgehensweise ist im Anspruch 9 beschrieben, wodurch die Bildung von Hohlräumen oder großflächigen Sauerstoffeinschlüssen im Verbindungselement vermieden wird, sodaß über den gesamten Querschnitt des Verbindungselementes eine gleichmäßige, qualitativ hochwertige Verbindung herstellbar ist.

Die vorteilhaften Maßnahmen nach den Ansprüchen 10 bis 13 ermöglichen eine verbesserte Verteilung des fließfähigen aushärtbaren Materials, wodurch die Oberfläche der Vertiefung bzw. Vertiefungen optimal benetzt werden und eine gute Verbindungsherstellung ermöglichen.

Vorteilhaft sind auch die Maßnahmen nach den Ansprüchen 14 und 15, weil durch die Anbringung der bevorzugt transparenten Verkleidungsplatten an den Öffnungen des Verbindungsbereiches das Fließverhalten und die mit dem Fließverhalten zusammenhängende Viskosität des Materials für das Verbindungselement während der Herstellung beobachtbar ist, wodurch auch im Baustellenbereich eine Aussage über die Qualität der Verbindung mittels Sichtkontrolle ohne komplizierte Prüfverfahren, wie beispielsweise Ultraschallprüfung etc., möglich ist.

Beim Vorgehen nach Anspruch 16 ist vorteilhaft, daß der aus metallischen Werkstoffen bestehende Anschlußteil mit zumindest einer weiteren, gegebenenfalls bereits bestehenden Tragkonstruktion, wie beispielsweise einer Stahlkonstruktion, Betonkonstruktion etc. verbindbar ist.

Die Maßnahmen nach den Ansprüchen 17 und 18 distanzieren die zueinander ausgerichteten Bauelemente und ermöglichen dadurch in einfacher Weise das einmalige Befüllen eines gemeinsamen Hohlraumes. Außerdem ist der Abstand zwischen zwei zueinander ausgerichteter Bauelemente beliebig variierbar.

Vorteilhaft ist auch eine Maßnahme nach Anspruch 19, weil die mit zumeist numerisch gesteuerten Werkzeugmaschinen gefertigten Vertiefungen nur einmal für eine bestimmte Serie programmiert werden müssen, wodurch die Kosten für die Fertigung gesenkt werden können. Ein weiterer Vorteil dabei ist, daß in einem einzigen Spannvorgang aus einem Holzbauteil zumindest zwei Bauelemente mit Vertiefungen ohne Werkzeugumstellung gefertigt werden können. Dadurch können kostenintensive Stillstandszeiten der Fertigungsmaschinen infolge von Rüstvorgängen eingeschränkt werden.

Beim Vorgehen nach Anspruch 20 ist vorteilhaft, daß jede beliebige Variation bereits bestehender oder neu zu errichtender Tragkonstruktionen möglich ist.

Maßnahmen nach den Ansprüchen 21 und 22 bilden in vorteilhafter Weise eine große Oberfläche für das Aneinanderhaften der Moleküle im Grenzflächenbereich der Bauelemente und dem Material für das Verbindungselement aus, wodurch eine hohe Belastung von der Verbindung, insbesondere dem Verbindungselement und den Bauelementen durch eine aus einer Vielzahl von Einzelverbindungen zwischen den Fasern und dem Verbindungselement bestehenden Verbindung übertragen bzw. aufgenommen werden kann.

Die Maßnahmen nach den Ansprüchen 23 bis 25 ermöglichen eine einfache Fertigung der oberflächenvergrößernden geometrischen Ausbildungsformen der Vertiefungen. Dadurch wird für das Verbindungselement eine große wirksame Oberfläche für das Anformen an und/oder Eindringen in die Oberfläche der Vertiefungen geschaffen, wodurch ein optimales Lastableitungs- und Aussteifungskonzept für die zumeist hochbelasteten Verbindungen geschaffen wird.

Eine vorteilhafte Maßnahme nach Anspruch 26 ermöglicht eine Oberflächenvergrößerung, die gleichermaßen zu einer Vergrößerung der wirksamen Angriffsfläche für das Verbindungselement darstellt, wodurch eine gleichmäßige Aufteilung der Kräfte bzw. positive und/oder negative Momente über den gesamten Querschnitt der Bauelemente ermöglicht wird.

Vorteilhaft ist auch eine Maßnahme nach Anspruch 27, wodurch die Holzbauteile über eine lange Einsatzdauer die gleichen Eigenschaften aufweist und es zu keinen unerwünschten Verdrehungen derselben kommt.

Die Maßnahmen nach den Ansprüchen 28 und 29 ermöglichen den Ausgleich fertigungsbedingter Toleranzabweichungen und das Zusammenfügen von Rissen im Bereich der Vertiefungen, womit wieder eine volle Belastung der Verbindung möglich ist. Im Zusammenwirken mit dem geringen Schwindmaß kann eine leistungsfähige Verbindung zur Übertragung von Kräften und/oder Momenten geschaffen werden.

Durch die Maßnahmen nach den Ansprüchen 30 und 31 kann eine Auslegung der Anzahl der Verbindungselemente und/oder Vertiefungen und/oder Verstärkungselemente und/oder Hohlräume auf die auftretenden, beispielsweise statischen oder dynamischen Belastungen abgestimmt werden. Andererseits kann auch der Aufwand für die Fertigung derartiger Bauelement genau abgestimmt werden.

Die Aufgabe der vorliegenden Erfindung wird eigenständig auch durch die Merkmale im unabhängigen Anspruch 32 gelöst. Die sich aus den Merkmalen des Kennzeichenteiles ergebenden überraschenden Vorteile dabei sind, daß durch die Einbringung eines zumindest eine gleich hohe Zug- und/oder Druck- und/oder Biegefestigkeit aufweisenden last- und/oder momentenübertragenden Verbindungselementes zwischen mehreren Bauelementen in mehreren Raumrichtungen Kräfte, positive und/oder negative Momente, Spannungen, Verdrehungen oder Vergleichsspannungen, Vergleichsmomente etc. bei vergleichsweise geringen Bruttoquerschnitten der Bauelemente aufnehmen kann. Dadurch können sicherheitstechnisch geforderte Überdimensionierungen, die sich bis zu 40% des Bruttoquerschnittes belaufen können, vermieden werden, die einerseits zu einer Einsparung des Bedarfes an Roh- und Hilfsstoffen und andererseits zu einer Minimierung des Gewichtes der Bauelementeverbindung beitragen. Dadurch können die Kosten für die Materialbeschaffung und für die Fertigung reduziert werden.

Gemäß einer Ausbildung nach den Ansprüchen 33 und 34 ist eine einfache Fertigung möglich.

Vorteilhaft ist auch eine Ausbildung gemäß Anspruch 35, wodurch die Kraftaufteilung im Verbindungsbereich beeinflußbar ist.

Eine Ausbildung nach Anspruch 36 erlaubt in vorteilhafter Weise eine weitere Anhebung der Quersteifigkeit der Bauelemente bzw. der Verbindung.

Durch die Ausbildungen nach den Ansprüchen 37 bis 39 ist es möglich, im Bereich des Verbindungselementes eine Anhebung des Verformungswiderstandes und der Tragfähigkeit zu erreichen.

Eine vorteilhafte Weiterbildung gemäß den Ansprüchen 40 und 41 ermöglicht das Einbringen eines einstöckigen vorfertigbaren Anschlußteiles mit zumindest einem Vorsprung in die Vertiefung, wobei der geöffnete Bereich von dem Anschlußteil abgeschlossen wird und dadurch zusätzliche Aufwendungen für die Abdeckung der Öffnungen an den Seitenflächen vermeidbar sind.

Gemäß den Ausbildungen, wie in den Ansprüchen 42 und 43 beschrieben, ist der Einsatz von standardisierten, kostengünstigen Materialien zur Verbesserung der Tragfähigkeit möglich.

Außerdem kann bei der Verwendung von Faserprodukten eine im wesentlichen parallele Lastverteilung im Verbindungselement erreicht werden.

Vorteilhaft ist auch eine Ausbildung nach Anspruch 44, wodurch der einstückig gefertigte Bauteil gleichermaßen ein Verstärkungselement ausbildet.

Durch die Ausbildungen nach Anspruch 45 kann auch über große Fügeflächen ein konstanter Abstand zwischen diesen und damit eine hohe Fertigungsgenauigkeit erreicht werden.

Durch die Ausbildungen nach den Ansprüchen 46 und 47 ist trotz geringem Querschnitt ein hohes Widerstandsmoment des Verstärkungselementes erreichbar, das eine im wesentlichen ungehinderte Verteilung des Materials während der Fertigung des Verbindungselementes zuläßt.

Die Aufgabe der vorliegenden Erfindung wird aber auch durch die Merkmale im Anspruch 48 gelöst. Der sich aus den Merkmalen des Kennzeichenteiles ergebende überraschende Vorteil dabei ist, daß sich an der Baustelle aus voneinander getrennten, unbeschwerlich zu transportierenden einzelnen Bauelementen ein ohne hohen maschinellen und werkzeugtechnischen Aufwand aus mehreren Bauelementen bestehender einstückiger Bauteil herstellen läßt, dessen Verbindung zwischen dem Verbindungselement und Bauelementen keine wesentliche Schwächung des Querschnittes darstellt. Auf diese Weise ist ein beliebig erweiterbares, einstückiges, eine hohe Biegesteifigkeit aufweisendes Bauteil schaffbar, dessen einzelnen Bauelemente unlösbar oder gegebenenfalls lösbar miteinander verbunden sind.

Die Aufgabe der vorliegenden Erfindung wird durch die Merkmale im Anspruch 49 gelöst. Die sich daraus ergebenden überraschenden Vorteile dabei sind, daß durch das Einbringen eines Kunstharzes ein Anformen bzw. Anhaften an und/oder Eindringen in die Oberfläche der Vertiefung der Bauelemente erreicht wird und das dabei entstehende Verbindungselement mit dem oder den Vorsprüngen in die Vertiefung oder Vertiefungen ragt und die Bauelemente miteinander form- und/oder kraftschlüssig verbindet.

Die Aufgabe der vorliegenden Erfindung wird durch die Merkmale im Anspruch 50 gelöst. Die sich daraus ergebenden überraschenden Vorteile sind, daß durch den Abstand der zu verbindenden Fügeflächen die Enden unterschiedlich ausführbar sind und beispielsweise aus Brettschichthölzern bestehen können, wobei nur geringere Anforderungen an die Herstellungstoleranzen der Endprofilierung der Enden der Holzbauteile erforderlich sind, weil das den Hohlraum ausfüllende Kunstharz zwangsläufig einen Toleranzausgleich mit sich bringt. Das den die Stoßfuge bildenden Hohlraum ausfüllende Kunstharz überträgt die auftretenden Kräfte, Momente etc. zwischen den Fügeflächen.

Die Aufgabe der vorliegenden Erfindung wird durch die Merkmale im Anspruch 51 gelöst. Der sich daraus ergebende überraschende Vorteil ist, daß durch die kurzen Aushärtezeiten eine derartige Verbindung mehrerer Bauelemente zu kostengünstigen Preisen herstellbar und die Verbindung im wesentlichen sofort einsetzbar ist.

Weitere Vorteile für die Ausbildungen nach den Ansprüchen 52 bis 59 werden nachfolgend beschrieben. Durch das Vorsehen einer Stoßfuge zwischen den Fügeflächen der zu verbindenden Enden der Holzbauteile, die unterschiedlich ausgeführt sein und beispielsweise aus Brettschichthölzern bestehen können, werden zunächst die Anforderungen an die Herstellungstoleranzen der Endprofilierung der Holzbauteile herabgesetzt, weil das die Stoßfuge ausfüllende Kunstharz zwangsläufig einen Toleranzausgleich mit sich bringt. Darüber hinaus entfällt die Notwendigkeit, die profilierten Enden der Holzbauteile unter einem vorgegebenen Mindestdruck zusammenzupressen. Das in die Stoßfuge eingegossene Kunstharz überträgt die auftretenden Kräfte zwischen den Fügeflächen. Darüber hinaus kann ein Abknicken der schräg aufeinander laufenden Fasern im Druckbereich vorteilhaft ausgeschlossen werden. Der Vergußkörper aus Kunstharz nimmt die beispielsweise bei Rahmenecken auftretenden Umlenkkräfte problemlos auf. Dazu kommt noch, daß Risse im Bereich der Fügeflächen durch das Kunstharz ausgefüllt werden, sodaß solche Risse keine Auswirkungen auf die Belastbarkeit der Verbindung haben. Als Kunstharz kann ein Epoxidharz eingesetzt werden, es ist aber beispielsweise auch möglich, die Stoßfugen mit einem Polyurethanharz auszugießen, wenn dies blasenfrei durchgeführt werden kann.

Diese Vorteile können bei Verbindungen ausgenützt werden, bei denen die beiden Enden mit ihren gegeneinander auf Lücke versetzten Keilzinken ineinandergreifen, wobei sich eine über alle Keilzinken erstreckende, durchgehende Stoßfuge ergibt, die in einfacher Weise durch in das Kunstharz eingießbare Abstandhalter vorgegeben werden kann. Es ist aber auch möglich, die Keilzinken der beiden Enden stumpf aneinanderstoßen zu lassen und die einzelnen sich zwischen den Fügeflächen ergebenden, im Querschnitt rautenförmigen Stoßfugenabschnitte mit einer in das Kunstharz eingegossenen Bewehrung zu versehen. Diese Bewehrung kann in einfacher Weise in die Stoßfugenabschnitte, die durch die stumpf aneinanderstoßenden Keilzinkenspitzen voneinander getrennt sind, eingebracht werden, ohne das nachträgliche Ausgießen der Stoßfugenabschnitte mit Kunstharz zu beeinträchtigen. Eine solche Verbindung kann daher höheren Belastungen ausgesetzt werden. Außerdem ergibt sich der Vorteil, daß die Verbindung wegen der stumpf aneinanderstoßenden Keilzinken im Seitenbereich kaum sichtbar ist. Darüber hinaus können die zu verbindenden Enden symmetrisch ausgebildet werden, was eine sonst notwendige Werkzeugumstellung überflüssig macht.

Obwohl die Bewehrung unterschiedlich ausfallen und beispielsweise durch Fasermaterial gebildet werden kann, ergeben sich besonders vorteilhafte Konstruktionsbedingungen, wenn die Bewehrung aus in die Stoßfugenabschnitte eingesetzten Metallplatten besteht, die eine erhebliche Querzugverstärkung mit sich bringen, ohne eine Querschnittsschwächung in Kauf nehmen zu müssen, wie dies beim Einsatz herkömmlicher zusätzlicher Zugverbindungen der Fall ist. Zur besseren Haftvermittlung können die Oberflächen der Metallplatten eine geeignete Profilierung aufweisen.

Besondere Vorteile ergeben sich hinsichtlich der Herstellung einer Klebeverbindung zweier Holzbauteile, weil zunächst die zu verbindenden Enden der Holzbauteile unter Freilassung einer Stoßfuge zwischen den Fügeflächen der ineinandergreifenden Keilzinken zusammengefügt werden können, bevor die Stoßfuge unter Beibehaltung des Fügeflächenabstandes mit einem Kunstharz als Klebstoff ausgegossen wird. Da das Kunstharz praktisch schwindungsfrei aushärtet, kommt es lediglich auf eine genaue gegenseitige Positionierung der zu verbindenden Holzbauteile an, was auch unter Baustellenbedingungen ohne weiteres erreicht werden kann. Das Ausgießen der zwischen den profilierten Enden der Holzbauteile freibleibenden Stoßfuge mit Kunstharz macht keine Schwierigkeiten, sodaß lediglich die erforderliche Abbindezeit abgewartet werden muß, um die in dieser Art und Weise miteinander verbundenen Holzbauteile weiter verwenden zu können. Der Fortfall einer Preßverklebung vereinfacht im Zusammenwirken mit den zulässigen größeren Fertigungstoleranzen die Herstellung der jeweiligen Verbindung, sodaß beispielsweise die Stiele und Riegel von Gelenkrahmen für Hallenkonstruktionen voneinander getrennt auf eine Baustelle geliefert werden können, um erst auf der Baustelle zusammengefügt zu werden.

Damit der gegenseitige Abstand der Fügeflächen zur Ausbildung einer entsprechenden Stoßfuge zwischen den Enden der zu verbindenden Holzbauteile ohne besonderen Aufwand sichergestellt werden kann, können die zu verbindenden Enden der Holzbauteile unter Zwischenschaltung von Abstandhaltern zwischen den Fügeflächen aneinandergefügt werden, wobei die Abstandhalter beim Ausgießen der Stoßfuge in das Kunstharz eingegossen werden.

Ähnliche Vorteile ergeben sich auch bei der Herstellung von Klebeverbindungen mit stumpf aneinanderstoßenden Keilzinken, weil zunächst die Enden der Holzbauteile mit stumpf aneinanderstoßenden Keilzinken zusammengefügt werden und dann in die einzelnen sich zwischen den Fügeflächen ergebenden, im Querschnitt rautenförmigen Stoßfugenabschnitte eine plattenförmige Bewehrung eingesetzt werden kann, bevor die Stoßfugenabschnitte mit einem Kunstharz als Klebstoff ausgegossen werden. Bestehen dabei die Bewehrungen aus Metallplatten, so können diese Metallplatten zur Beschleunigung der Aushärtung des Kunstharzes erwärmt werden.

Das blasenfreie Einbringen eines Kunstharzes, beispielsweise eines lösungsmittelfreien Epoxidharzes in die Stoßfuge kann mit Hilfe von Injektionsnadeln einfach vorgenommen werden. Es ist aber auch möglich, das Kunstharz in die Stoßfuge von oben einzugießen. In Sonderfällen kann auf das Kunstharz eine Sogwirkung durch das Anlegen eines Unterdruckes an die Stoßfuge ausgeübt werden, um eine gute Befüllung der Stoßfuge zu erhalten. Mit dem Anlegen eines Unterdruckes an die Stoßfuge wird allerdings der Geräteaufwand zur Herstellung der Verbindung zweier Holzbauteile vergrößert.

Weitere Vorteile für einzelne Ausführungsbeispiele können der nachfolgenden detaillierten Beschreibung entnommen werden.

Die Erfindung wird nachstehend anhand der in den Zeichnungen dargestellten Ausführungsbeispiele näher beschrieben.

Es zeigen:
- Fig. 1: eine erfindungsgemäße Verbindung zweier Bauelemente, insbesondere Holzbauteile in Draufsicht, geschnitten und in schematischer Darstellung;
- Fig. 2: eine erfindungsgemäße Verbindung zweier Holzbauteile in einem schematischen Schnitt;
- Fig. 3: einen Abstandhalter zum Einlegen in die Stoßfuge zwischen den profilierten Enden der gemäß der Fig. 2 zu verbindenden Holzbauteile in einer Draufsicht;
- Fig. 4: eine weitere Ausführungsform einer erfindungsgemäßen Verbindung zweier Holzbauteile in einer der Fig. 2 entsprechenden Darstellungsart;
- Fig. 5: einen Teilbereich des Bauelementes nach Fig. 1 in Draufsicht und vergrößerter, schematischer Darstellung;
- Fig. 6: eine andere Ausbildung des erfindungsgemäßen Verbindungselementes und Verstärkungselementes in Draufsicht, geschnitten und in schematischer Darstellung;
- Fig. 7: eine weitere Ausbildung des erfindungsgemäßen Verbindungselementes mit einem Anschlußteil in Seitenansicht und in stark vereinfachter, schematischer Darstellung;
- Fig. 8: eine andere Ausführungsvariante des Verbindungselementes in Draufsicht, geschnitten und in stark vereinfachter Darstellung;
- Fig. 9: eine andere Ausführungsvariante des erfindungsgemäßen Verbindungselementes in Ansicht, geschnitten und in stark vereinfachter, schematischer Darstellung.

Einführend sei festgehalten, daß in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbei spielen für sich eigenständige, erfinderische oder erfindungsgemäße Lösungen darstellen.

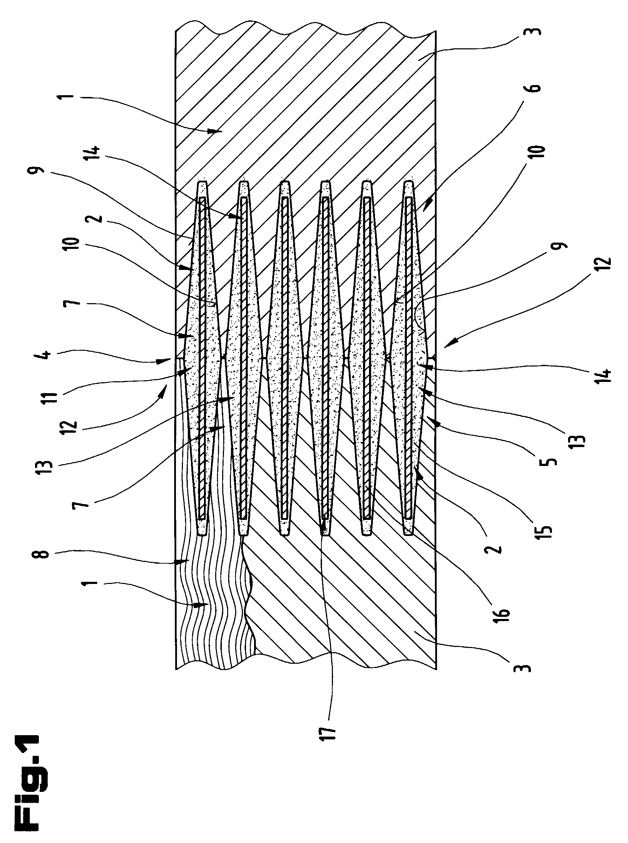

In der Fig. 1 sind zwei miteinander verbundene Bauelemente 1 dargestellt, die mit über zumindest ein einstückiges last- und/oder momentübertragendes Verbindungselement 2 zusammengefügt werden, das positive und/oder negative Momente, Spannungen, Verdrehungen oder Vergleichsspannungen, Vergleichsmomente etc. aufnehmen kann. Die beliebig zueinander zuordenbaren Bauelemente 1, die beispielsweise durch mehrere Holzbauteile 3 gebildet sind, weisen in einem durch mehrere zueinander ausgerichteter Bauelemente 1 gebildeten Verbindungsbereich 4 ein oder mehrere einteilige und/oder voneinander getrennte Verbindungselemente 2 auf. Ein Verbindungsbereich 4 wird im gezeigten Ausführungsbeispiel durch die beiden Enden 5 und 6 der bevorzugt einen rechteckförmigen Querschnitt aufweisenden Bauelemente 1 gebildet. Das zumindest zum Teil aus Holz bestehende Bauelement 1 weist im Verbindungsbereich 4 zumindest eine nutartige, fingerartige, verzahnungsartige, profilartige etc. Vertiefung 7 mit zumindest schräg zu einer Faserrichtung 8 verlaufenden, Fügeflächen 9 bildende Seitenflächen 10 auf. Die geöffneten Bereiche 11 der einander zugewandten mittelbar oder unmittelbar aneinander angrenzenden, beispielsweise V-förmigen Vertiefungen 7 werden, wie in diesem Ausführungsbeispiel gezeigt, bevorzugt im Bereich der senkrecht zur Längserstreckung der Bauelemente 1 verlaufenden Stirnseiten 12 angeordnet und bilden im verbundenen Zustand der miteinander zu verbindenden Bauelemente 1 einen in etwa rautenförmigen Hohlraum 13 aus, in dem das Verbindungselement 2 und gegebenenfalls ein oder mehrere einteilige oder mehrteilige Verstärkungselemente 14 eingebracht werden. Natürlich kann der Hohlraum 13 beispielsweise auch durch eine Stoßfuge oder einen Stoßfugenabschnitt etc. gebildet sein. Die sich zumindest bereichsweise senkrecht oder schräg zwischen den Schmalseitenflächen und/oder den Breitseitenflächen des Bauelementes 1 erstreckenden Vertiefungen 7 weisen eine zwischen den durch die Schmalseitenflächen und/oder Breitseitenflächen begrenzende Tiefe auf. Das beispielsweise durch Kunstharz 15 gebildete Verbindungselement 2 umgibt bevorzugt vollflächig das in Längsrichtung der Vertiefung 7 oder der Vertiefungen 7 angeordnete Verstärkungselement 14, das sich von zumindest einer Vertiefung 7 des einen Bauelementes 1 in zumindest eine Vertiefung 7 eines weiteren Bauelementes 1 erstreckt. Faserverstärkungen 16 und/oder Bewehrungen 17 und/oder metallische Werkstoffe und/oder ein Gewebe oder Gewirke aus hochfesten Materialien bilden beispielsweise das zwischen den beiden Bauelementen 1 angeordnete Verstärkungselement 14, das vor dem Herstellen des Verbindungselementes 2 oder unmittelbar nach dem Vergießen des Materials für das Verbindungselement 2 oder den Verbindungselementen 2 in zumindest eine Vertiefung 7 eines Bauelementes 2 eingebracht wird.

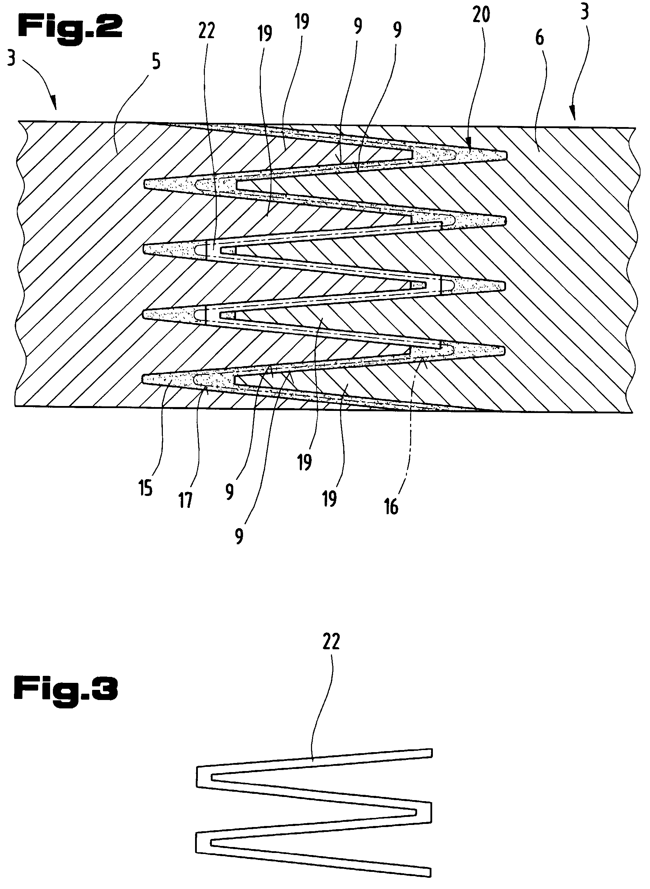

Gemäß den in den Fig. 2 und 3 dargestellten Ausführungsbeispielen weisen die beiden Enden 5 und 6 zweier aus Brettschichthölzern bestehender Holzbauteile 3 eine Keilzinkenprofilierung mit Keilzinken 19 auf, deren Flanken einander gegenüberliegende, unter einem vorgegebenen Flankenwinkel geneigte, paarweise parallele Fügeflächen 9 bilden. Die Keilzinken 19 können dabei rechtwinkelig oder parallel zur Breitseite der Hölzer gefertigt werden. Im Gegensatz zu herkömmlichen Keilzinkenverbindungen werden jedoch die beiden Enden 5 und 6 nicht nach einem beidseitigen Einstreichen der Fügeflächen 9 mit einem Klebstoff gegeneinander gepreßt, sondern so angeordnet, daß die Fügeflächen 9 in einem gegenseitigen Abstand parallel verlaufen, sodaß sich zwischen den Enden 5 und 6 der Holzbauteile 3 eine Stoßfuge 20 ergibt, die zur Verbindung der beiden Enden 5 und 6 der Holzbauteile 3 eine Stoßfuge 20 ergibt, die zur Verbindung der beiden Enden 5 und 6 mit einem Kunstharz 15, beispielsweise einem Epoxidharz oder einem Polyurethanharz ausgegossen werden kann. Dieses Kunstharz 15 ergibt die tragende Verbindung zwischen den beiden Enden 5 und 6 der Holzbauteile 3, wobei an die Herstellung der Keilzinken 19 keine hohen Ansprüche hinsichtlich der Maßhaltigkeit und Oberflächenbeschaffenheit gestellt werden müssen, weil sich zufolge der mit Kunstharz 15 ausgegossenen Stoßfuge 20 ein weitgehender Toleranzausgleich ergibt, ohne Festigkeitseinbußen befürchten zu müssen.

Zur Herstellung der Verbindung der beiden Holzbauteile 3 sind deren profilierte Enden 5 und 6 bei einer entsprechenden gegenseitigen Positionierung der Holzbauteile 3 so zusammenzufügen, daß zwischen den parallelen Fügeflächen 9 eine Stoßfuge 20 frei bleibt. Zu diesem Zweck können vorteilhaft Abstandhalter zwischen die profilierten Enden 5 und 6 eingelegt werden. Diese dem Zinkenprofil folgenden, sich vorzugsweise über zwei Keilzinken 19 erstreckenden Abstandhalter 22 legen eine vorbestimmte Dicke der Stoßfuge 20 fest und unterstützen die gegenseitige Ausrichtung der Holzbauteile 3. Es bedarf daher nur mehr die Stoßfuge 20 mit Kunstharz 15 ausgegossen zu werden, wofür vorteilhaft Injektionsnadeln eingesetzt werden können, um ein blasenfreies Einbringen des Kunstharzes in die Stoßfuge 20 sicherzustellen. Nach dem Aushärten des in die Stoßfuge 20 eingebrachten Kunstharzes 15 ist die Verbindung der Holzbauteile 3 fertiggestellt. Es braucht daher keiner aufwendigen Preßeinrichtungen, um die beiden Holzbauteile 3 mit einer vorgegebenen Mindestpreßkraft gegeneinander zu drücken. Es ist lediglich für eine entsprechende Ausrichtung der Holzbauteile 3 gegeneinander zu sorgen, was auch unter Baustellenbedingungen möglich ist. Damit sind alle Voraussetzungen für eine Verbindung geschaffen, die nicht nur allen statischen Anforderungen vorteilhaft entspricht, sondern auch einfach und trotz vergleichsweise hoher Fertigungstoleranzen maßgenau hergestellt werden kann.

Ist mit erhöhten Querzugkräften zu rechnen, so kann in die Stoßfuge 20 eine Faserverstärkung 16, beispielsweise in Form einer Fasermatte eingebracht werden, wie dies in der Fig. 2 strichpunktiert angedeutet ist. Diese Faserverstärkung 16 wird beim Ausfüllen der Stoßfuge 20 vom Kunstharz 15 durchtränkt und bildet nach dem Aushärten des Kunstharzes eine entsprechende Bewehrung 17 dieses Vergußkörpers.

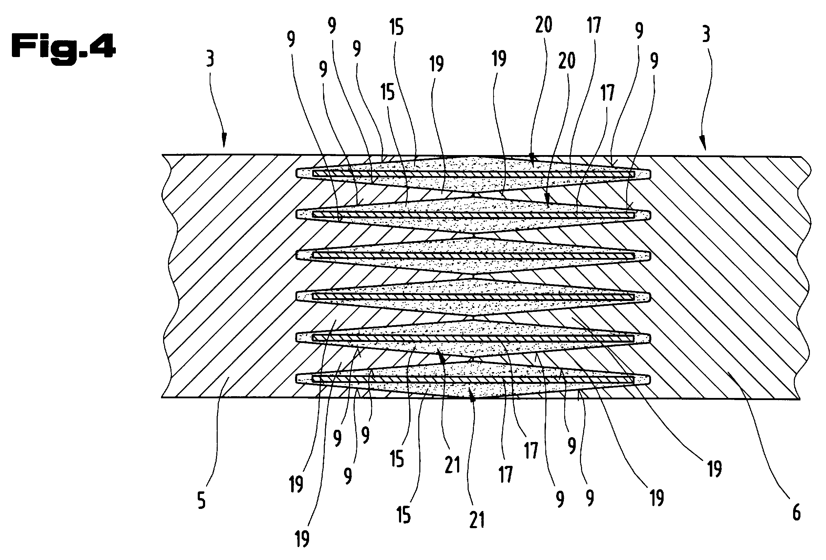

Das Einbringen der Faserverstärkung 16 in die Stoßfuge 20 und das anschließende vollständige Ausgießen der Stoßfuge 20 mit Kunstharz 15 kann jedoch zu Schwierigkeiten führen. Für höhere Querzugkräfte eignet sich daher eine Verbindung entsprechend der Fig. 4 besser. Bei dieser Ausführungsform sind die beiden Enden 5, 6 der zu verbindenden Holzbauteile 3 symmetrisch ausgebildet, sodaß beim Zusammenfügen der Enden 5, 6 die Keilzinken 19 stumpf aneinanderstoßen und sich zwischen den Keilzinken 19 durch die einander gegenüberliegenden Fügeflächen 9 begrenzte rautenförmige Stoßfugenabschnitte 21 ergeben, die voneinander durch die Keilzinken 19 getrennt sind. Diese Stoßfugenabschnitte 21 bieten ausreichend Raum zum Einsetzen einer Bewehrung 17, die ohne Schwierigkeit vollständig in das die Stoßfugenabschnitte 21 ausfüllende Kunstharz 15 eingegossen werden kann. Als Bewehrung 17 können Fasermatten eingesetzt werden, doch können mit Metallplatten als Bewehrung 17 besonders einfache Konstruktionsverhältnisse geschaffen werden, die außerdem den Vorteil bieten, über ihre Erwärmung nicht nur den Aushärtevorgang des Kunstharzes 15 zu beschleunigen, sondern auch Einfluß auf die Festigkeit des ausgehärteten Kunstharzes 15 nehmen zu können. Mit der Erwärmung des Kunstharzes 15 über die metallische Bewehrung 17 kann eine unerwünschte Erwärmung der Holzbauteile 3 vermieden und damit die Gefahr einer unzulässigen Schwindspannung ausgeschlossen werden. Die Erwärmung der metallischen Bewehrung 17 kann in vorteilhafter Weise über eine an sich bekannte Induktion von Wirbelströmen in der Bewehrung 17 erfolgen.

Die Erfindung ist selbstverständlich nicht auf die dargestellten Ausführungsbeispiele beschränkt, die die Verbindung zweier Holzbauteile 3 zu einem geraden Bauteil veranschaulicht. Die erfindungsgemäße Verbindung eignet sich insbesondere zur Eckausbildung von Gelenkrahmen für Hallenkonstruktion od. dgl., weil die im Bereich der Rahmenecken auftretenden Umlenkkräfte durch den Vergußkörper aus Kunstharz 15 problemlos aufgenommen werden können. Außerdem können die Holzbauteile 3 unterschiedlich aufgebaut sein und aus Kanthölzern oder Furnierschichthölzern oder I-Trägern bestehen.

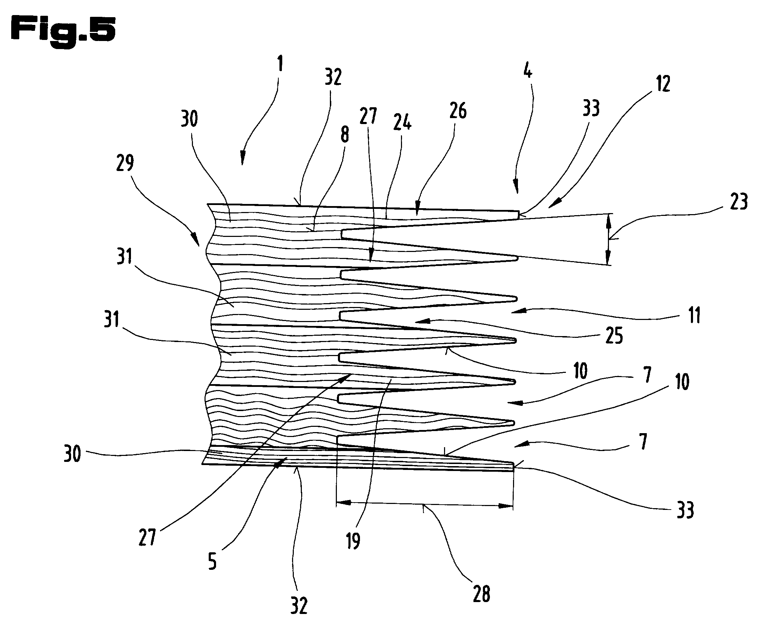

Die Fig. 5 zeigt einen Teilbereich eines Bauelementes 1 in vergrößerter und stark vereinfachter Darstellung. Das einen im wesentlichen rechteckförmigen oder quadratischen etc. Querschnitt aufweisende Bauelement 1 ist mit zumindest einer winkelig verlaufenden nutartigen, insbesondere im Querschnitt V-förmig oder trapezförmig ausgebildeten Vertiefung 7 ausgestattet, die an einer zu einem weiteren Bauelement 1 (nicht dargestellt) zugewandten Vertiefung 7 zwei gegengleich konisch aufweitende Seitenflächen 10 aufweist. Bevorzugt sind die einen V-förmigen etc. Querschnitt aufweisenden Vertiefungen 7 an einem durch die beiden zusammenlaufenden Seitenflächen 10 gebildeten Endbereich bzw. Spitze abgerundet. Die unter einem Winkel 23 in Längsrichtung von Fasern 24 bzw. Faserrichtung 8 geneigt verlaufenden Seitenflächen 10 weisen eine Neigung von 3° bis 14° auf, der bevorzugt zwischen 5° bis 7,1° liegt. Durch die geringe Neigung der Seitenflächen 10 kann eine große Oberfläche 25 der Vertiefungen 7 und damit eine hohe Anzahl an durch Seitenflächen 10 begrenzten Faserverlauf 26 bzw. Fasern 24 für das Verbindungselement 2 geschaffen werden und begünstigt dadurch gleichermaßen das Anformen an und/oder Eindringen in die Oberfläche 25 der Vertiefungen 7 des Verbindungselementes 2. Durch die Vielzahl der in einem Grenzflächenbereich 27 endenden Fasern 24 treten diese mit dem Verbindungselement 2 in Verbindung, wodurch eine tragfeste Verbindung zwischen dem Verbindungselement 2 und den Bauelementen 1 geschaffen wird. Um diesen vorteilhaften Effekt ausnützen zu können, können daher alle oberflächenvergrößernden geometrischen Ausbildungen der Vertiefungen 7 ausgebildet werden, wie dies vor allem durch winkelig und/oder konkav und/oder konvex und/oder schwalbenschwanzförmig verlaufende Seitenflächen 10 erreichbar ist. Natürlich besteht auch die Möglichkeit die Seitenflächen 10 in Richtung zur Spitze abzustufen. Das im Ausgangszustand für das Verbindungselement 2 in flüssiger oder pastöser Form in den Hohlraum 13 der Bauelemente 1 eingebrachte Material bewirkt durch die Adhäsion von aneinanderhaftenden Molekülen im Grenzflächenbereich 27 der Bauelemente 1 und des Verbindungselementes 2 (in Fig. 5 nicht dargestellt) eine kraftschlüssige Verbindung derselben, wobei nach dem Aushärten des ursprünglich flüssigen oder pastösen Materials in vorteilhafter Weise eine kraft- und formschlüssige, gegebenenfalls stoffschlüssige Verbindung zwischen Bauelementen 1 und Verbindungselement 2 herstellbar ist. Die Vertiefungen 7 werden, wie in diesem Ausführungsbeispiel dargestellt, durch eine senkrecht zur Stirnseite 12 bemessene Tiefe 28 begrenzt.

Die Tiefe 28 der Vertiefungen 7 beträgt 10 bis 200 mm, bevorzugt 50 bis 80 mm, wobei sich die Größe des geöffneten Bereiches 11 durch den trigonometrischen Zusammenhang mit dem Winkel 23 ergibt.

Zumindest ein zum Teil aus Holz bestehendes Bauelement 1 kann durch mehrere unterschiedliche und/oder gleiche Festigkeitswerte aufweisende Schichten 29, wie dies schematisch in Fig. 5 dargestellt ist, ausgestattet werden, wie dies beispielsweise durch mehrere miteinander verbindbare Materialien schaffbar ist. Zumindest eine zwischen den Deckschichten 30 angeordnete Zwischenschicht 31 wird mit einem Verbindungselement, beispielsweise einem Klebstoff oder dgl., mit diesen verbunden. Auf diese Weise ist es beispielsweise möglich, einen aus mehreren Schichten 29, insbesondere einen aus Bretterschichten zusammengesetzten Holzbauteil 3 zu bilden. Eine andere, nicht weiters dargestellte Ausführungsvariante besteht darin, daß zumindest eine der Schichten 29, insbesondere die Zwischenschicht 31, mit einem eine gleiche oder höhere Festigkeit aufweisenden Material, wie beispielsweise Eisen- oder Nichteisenmetalle, Holzfaserverstärkungen, Kunststoffe, Faserverbundwerkstoffe, Aluminium etc. eingelegt werden. Es ist selbstverständlich auch möglich, ein Prepreg-Bauelement aus vorbereiteten Matten aus Fasern bzw. Netzen, Gewirken oder Vliesen aus Metall, Glas oder Kohlenstoff zu verwenden. Um ein besseres Verformungsverhalten zu erreichen, kann natürlich das Material der Zwischenschicht 31 eine niedrigere Festigkeit aufweisen. Dadurch läßt sich in vorteilhafter Weise eine Überdimensionierung bei optimaler Ausnutzung des Bruttoquerschnittes derartiger Bauelemente 1 vermeiden. Neben der Reduzierung der Fertigungskosten ergeben sich zusätzlich die Vorteile des geringeren Materialaufwandes und der niedrigeren Kosten für die Herstellung der Bauelemente 1, als auch eine einfachere Montage der zu einem Tragwerk zusammengesetzten Bauelemente 1. Eine Breite der Bauelemente 1 distanziert zwei parallel zueinander verlaufende Breitseitenflächen 32, wobei rechtwinkelig dazu zwei parallele Schmalseitenflächen verlaufen und deren rechtwinkelig zur Schmalseitenflächen in Längserstreckung der Bauelemente 1 bemessene Länge durch zwei voneinander distanzierte Stirnseiten 12 begrenzt ist. Eine zumindest schräg, bevorzugt rechtwinkelig zur Schmalseitenfläche ausgerichtete Stütz- und/oder Verbindungsfläche 33 ist zumindest bereichsweise durch geöffnete Bereiche 11 der Vertiefungen 7 unterbrochen.

Durch eine geneigte, konkave, konvexe etc. Ausbildung der Seitenflächen 10 kann an die für die Wirksamkeit der Verbindung maßgebende Oberfläche 25 der Vertiefung 7 oder Vertiefungen 7 um das zumindest 5, bevorzugt das 6 bis 10-fache, insbesondere um das 8,2-fache, größer ausgebildet werden als eine bevorzugt senkrecht zur Schmalseitenfläche verlaufende Stütz- und/oder Verbindungsfläche 33. Der sich daraus ergebende Vorteil der Oberflächenvergrößerung ermöglicht eine Vergrößerung der wirksamen Angriffsfläche für das Verbindungselement 2 bzw. den Vergußkörper, was vor allem für eine gleichmäßige Aufteilung der Kräfte über den gesamten Querschnitt der Bauelemente 1 beiträgt.

Eine andere, nicht weiters dargestellte Ausführungsvariante besteht darin, daß die einander zugewandten Stirnseiten 12 der in ihrer Lage zueinander ausgerichteten Bauelemente 1 geneigt zu Schmalseitenflächen verlaufend angeordnet sind. Durch die Hintereinanderreihung mehrerer eine Längsverbindung bildender Bauelemente 1 mit schräg zur Schmalseitenfläche und/oder Breitseitenfläche 32 verlaufenden Stütz- und/oder Verbindungsflächen 33 bilden eine große Abscherfläche für die an der Schmalseitenfläche der Längsverbindung einwirkenden Kräfte aus und ermöglichen dadurch in Verbindung mit den durch die Keilzinken 19 gegebenenfalls voneinander getrennte Verbindungselemente 2 ein optimales Lastableitungselement für Tragwerkssysteme.

Natürlich besteht auch die Möglichkeit, daß an einer der einwirkenden Kraft zugewandten Seite im Bereich der Stütz- und/oder Verbindungsfläche 33 und in Längserstreckung des Bauelementes 1 ein nicht weiters dargestellter Fortsatz ausgebildet ist, der sich auf einer dem weiteren Bauelement 1 zugeordneten und gegengleich ausgebildeten Rücksetzung abstützt. Natürlich kann an einer dem durch den Fortsatz und der Rücksetzung gebildeten Arretierelement gegenüberliegenden Seite ein weiteres Arretierelement ausgebildet werden, wobei der Fortsatz und die Rücksetzung jeweils gegenüberliegend und vom anderen Bauelement 1 ausgebildet wird. Bevorzugt überragt der zwischen einer Vertiefung 7 und der Schmalseitenfläche angeordnete, mit einer Länge ausgebildete Fortsatz die Stütz- und/oder Verbindungsfläche 33 und übergreift die am anderen Bauelement 1 ausgebildete Rücksetzung. Auf diese Weise kann eine auf die Bauelemente 1 im Verbindungsbereich 4, insbesondere die auf die Verbindungselemente 2 und Bauelemente 1 einwirkende Kraft zumindest teilweise umgelenkt bzw. aufgeteilt werden. Die Fortsätze und Rücksetzungen können derart aneinander angepaßt werden, sodaß die Stütz- und/oder Verbindungsflächen 33 unmittelbar aneinanderliegen oder daß diese in einem einen Spalt bildenden Abstand voneinander distanziert angeordnet sind.

Von weiterem Vorteil dabei ist, daß im Verbindungsbereich 4 die zueinander ausgerichteten Bauelemente 1 sich im Bereich der einander zugewandten Vertiefungen 7 zumindest teilweise überlappen und/oder sich im Bereich der Stütz- und/oder Verbindungsflächen 33 gegenseitig abstützen, wodurch die durch eine Belastung hervorgerufene Flächenpressung im Bereich der aufeinander abstützenden Stütz- und/oder Verbindungsflächen 33 größtenteils auf den wirksamen Querschnitt der Bauelemente 1 übertragen wird.

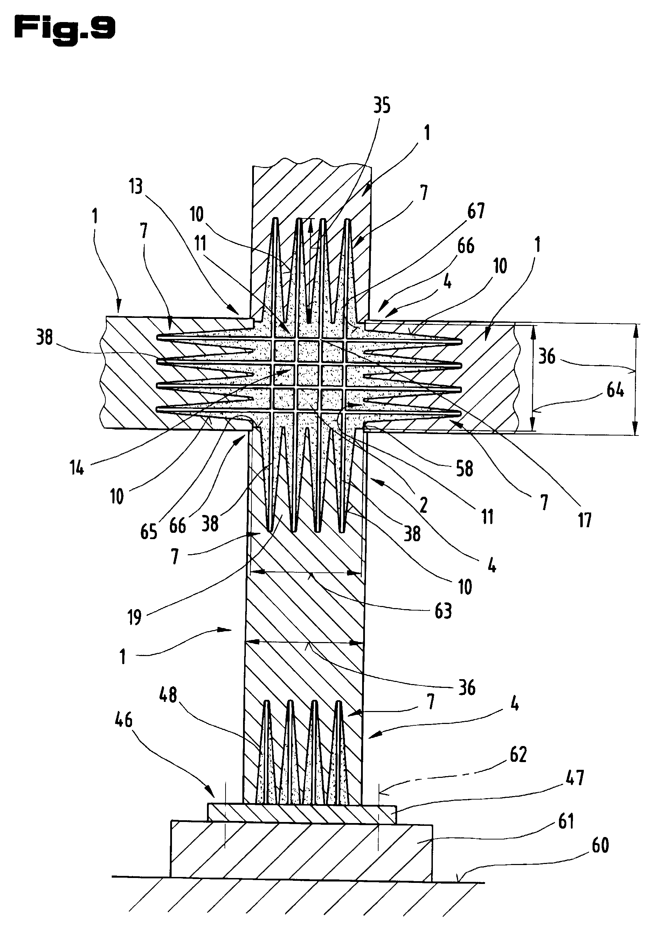

Im allgemeinen kann der senkrecht zur Stütz- und/oder Verbindungsfläche 33 oder der zwischen Fügeflächen 9 senkrecht gemessene Abstand zumindest zweier zueinander ausgerichteter Bauelemente 1 in etwa zwischen 0 bis 60 mm, insbesondere bei stumpf aneinander gelegten Bauelementen 1 im wesentlichen 0 mm oder bei einer anderen bevorzugten Ausführung - gemäß Fig. 9 - 40 mm oder bei ineinandergreifenden Keilzinken 19 - gemäß Fig. 2 - etwa 5 mm betragen. Durch das Anbringen von Abstandhaltern 22 im Hohlraum 13 der Vertiefungen 7, insbesondere in den Stoßfugen 20, ist ein Abstand zwischen Bauelementen 1 voreinstellbar.

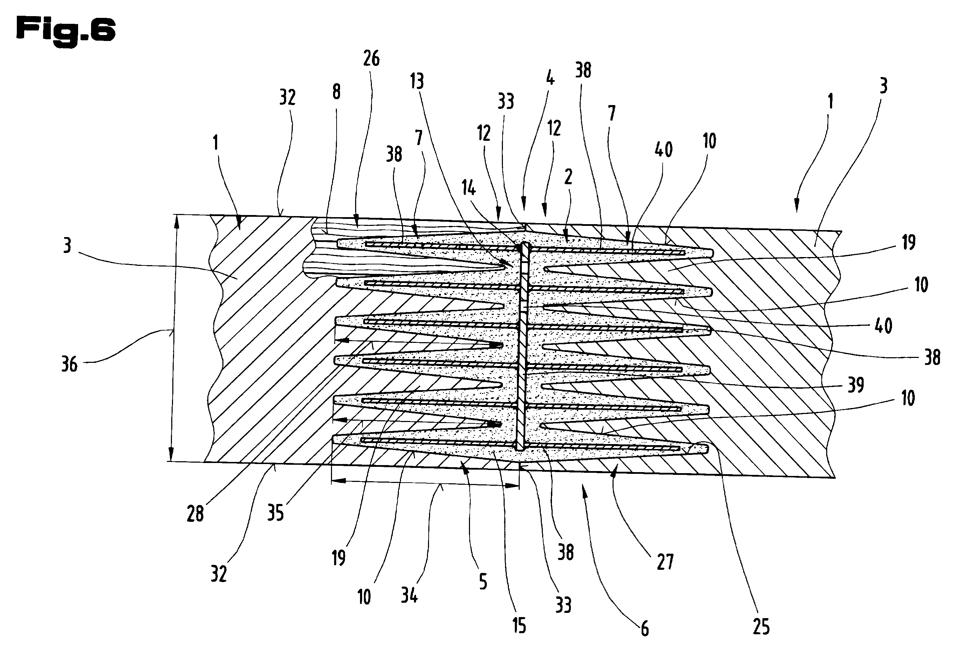

In der Fig. 6 ist eine weitere Ausführungsvariante einer Verbindung, insbesondere einer Längsverbindung, mehrerer zumindest zum Teil aus Holz bestehender Bauelemente 1 mit zumindest einer in dem Verbindungsbereich 4 nutartigen Vertiefung 7 dargestellt, deren Seitenflächen 10 der Vertiefung 7 zumindest schräg zur Faserrichtung bzw. zum Faserverlauf 26 verlaufen. Wie in dieser beispielhaften Ausführung gezeigt, werden die beiden zueinander ausgerichteten Bauelemente 1 im Bereich der einander zugewandten Stirnseiten 12 verbunden. Die in bezug auf eine Stütz- und/oder Verbindungsfläche 33 zwischen den beiden Bauelementen 1 spiegelbildlich zueinander angeordneten Vertiefungen 7 werden zumindest teilweise von den Keilzinken 19 umgrenzt, wobei eine Länge 34 der zur Breitseitenfläche 32 benachbarten Keilzinken 19 in Längserstreckung der Bauelemente 1 gemessen größer bemessen ist, als eine Länge 35 der in Richtung einer Breite 36 zwischenliegenden Keilzinken 19. Dadurch bilden die äußersten, gegengleich zueinander ausgerichteten und stumpf aneinanderstoßenden Keilzinken 19 der Bauelemente 1 im Verbindungsbereich 4 der Breitseitenfläche 32 eine dichtende Verbindung mit den Stütz- und/oder Verbindungsflächen 33 aus. Das im Ausgangszustand in flüssiger oder pastöser Form vorliegende Material für das Verbindungselement 2 wird von einem gemeinsamen, durch die beiden äußeren und den zwischen diesen beiden gegenüberliegenden Keilzinken 19 gebildeten Hohlraum 13 der aneinandergelegten Bauelemente 1 umgrenzt. Für die allseitige Abdichtung des Verbindungsbereiches 4 werden die Öffnungen an der Breitseitenfläche 32 und/oder Schmalseitenfläche verschlossen, worauf in den nunmehr nach allen Seiten abgedichteten Hohlraum 13, in dem das Material, das im ausgehärteten Zustand ein im wesentlichen einstückiges Verbindungselement 2 zwischen zueinander ausgerichteten Bauelementen 1 ausbildet, verbracht wird. Natürlich ist auch eine asymmetrische Ausbildung der einander zugewandten Vertiefungen 7 bzw. der Keilzinken 19 möglich.

Um die Tragfähigkeit derartiger Verbindungen zwischen zwei oder mehreren Bauelementen 1 weiters zu erhöhen, werden im Verbindungsbereich 4 der zu verbindenden Bauelemente 1, insbesondere zwischen den einander zugewandten Keilzinken 19 und/oder innerhalb zweier einander gegenüberliegenden Vertiefungen 7 Verstärkungselemente 14 eingebracht, die im Verbindungselement 2 angeordnet bzw. in diesem eingebettet sind bzw. vollflächig von dem in den Hohlraum 13 einzubringenden Verbindungselement 2 umhüllt werden.

Wie in der Fig. 6 schematisch dargestellt, ist das mehrteilige Verstärkungselement 14 zu einer Baueinheit zusammengefügt, wobei alle aus dem Stand der Technik bekannten Fügeverfahren, wie beispielsweise Schweißen, Löten etc. zum Herstellen derselben verwendet werden können. Die Bauelemente 1 bzw. das Verbindungselement 2 und gegebenenfalls das Verstärkungselement 14 sind derart ausgerichtet, daß diese in Richtung der Belastung das höhere Widerstandsmoment aufweisen. Das zweckmäßig in Belastungsrichtung ein hohes Widerstandsmoment aufweisende Verstärkungselement 14 weist mehrere sich von zumindest einer Vertiefung 7 des einen Bauelementes 1 in zumindest eine Vertiefung 7 eines anderen Bauelementes 1 erstreckende einstöckige Stege 38 auf, die mit einer weiteren, bevorzugt senkrecht zur Breitseitenfläche 32 ausgerichtetem Quersteg 39 verbunden sind. Das zwischen Bauelementen 1 angeordnete Verstärkungselement 14 erstreckt sich zumindest über einen Teil der Länge 34, 35 bzw. Tiefe 28 der Vertiefungen 7. Bevorzugt ist das materialeinheitlich und einstückig gefertigte Verstärkungselement 14 mit bevorzugt mehreren zueinander distanzierten, in die Vertiefungen 7 ragenden Stegen 38 ausgebildet, wobei die Stege 38 und der Quersteg 39 Öffnungen 40, Durchbrüche etc. aufweisen kann, um einen möglichst ungehinderten Durchtritt des flüssigen oder pastösen Materials für das Verbindungselement 2 während der Fertigung zu ermöglichen. Natürlich können auch die in Belastungsrichtung ein hohes Widerstandsmoment aufweisenden Stege 38 mit einer oder mehreren Öffnungen 40 etc. und/oder mit einer Profilierung versehen werden. Das Verstärkungselement 14 kann beispielsweise aus einem metallischen Werkstoff, einem Gewebe und/oder einem Gewirke aus hochfesten Materialien, wie beispielsweise Glasfasern, Kohlefasern, Aramitfasern oder dgl. gebildet werden. Beispielsweise kann die Oberfläche der Verstärkungselemente 14 mit einem oberflächenbenetzenden Mittel oder einen Primäranstrich für eine das Anhaften des Materials des Verbindungselementes 2 fördernde Verbindungsherstellung aufweisen.

Selbstverständlich kann das Verstärkungselement 14, insbesondere die Stege 38 und der Quersteg 39, die Oberfläche 25 der Vertiefungen 7 überragen, indem es in diese eingepreßt oder eingeschlagen wird.

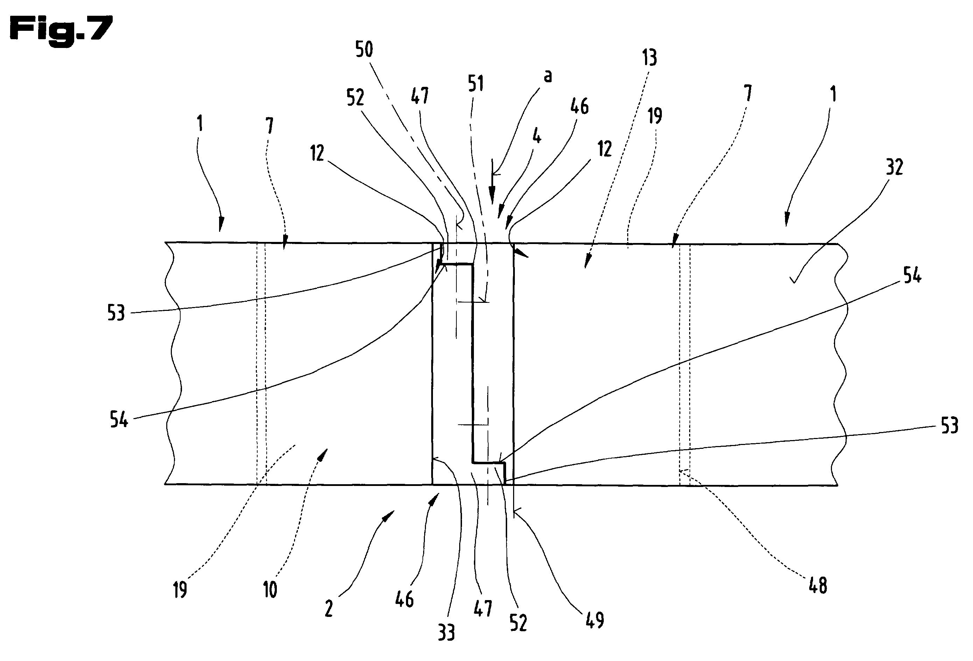

In der Fig. 7 ist eine weitere Ausführungsvariante einer Verbindung mehrerer Bauelemente 1 gezeigt, die sowohl in Kombination mit der erfindungsgemäßen Verbindung gemäß der Ausführung, wie sie in den Fig. 1 bis 6 beschrieben wurde, mit Vorteil einsetzbar ist, jedoch auch eine eigene, unabhängige erfinderische Lösung bilden kann. Wie in diesem Ausführungsbeispiel gezeigt, ist zumindest ein zum Teil aus Holz bestehendes Bauelement 1 im Verbindungsbereich 4 mit zumindest einer nutartigen Vertiefung 7 ausgestattet, deren Seitenflächen 10 der Vertiefungen 7 zumindest schräg zur Faserrichtung bzw. zum Faserverlauf 26 verlaufen. Die in ihrer Lage zueinander ausgerichteten Bauelemente 1 werden mit ihren Stirnseiten 12 aneinandergelegt und miteinander verbunden. Die quer zur Schmalseitenfläche in Richtung der Breite 36 (siehe Fig. 6) angeordneten Vertiefungen 7 werden von den Keilzinken 19 zumindest teilweise umgrenzt und bilden zumindest mit einem der Stütz- und/oder Verbindungsfläche 33 zugeordneten Bauelement 46 einen Hohlraum 13 für das Verbindungselement 2 aus. Ein einen Anschlußteil 47 für ein weiteres Bauelement 1 bildendes Bauelement 46, das zumindest bereichsweise an der Stütz- und/oder Verbindungsfläche 33 stumpf aufgelegt wird, weist eine im wesentlichen gleiche Querschnittsform wie das mit einer Breite 36 und einer Höhe ausgebildete Bauelement 1 auf. Eine den Vertiefungen 7 zugewandte Oberfläche des Anschlußteiles 47 begrenzt diese und bildet den Hohlraum 13 für das Material des Verbindungselementes 2 aus.

Bevorzugt verlaufen die Stütz- und/oder Verbindungsflächen 33 der einander zugewandten Bauelemente 1 senkrecht zu der Schmalseitenfläche, wobei der die Stütz- und/oder Verbindungsflächen 33 bereichsweise überdeckende Anschlußteil 47 deckungsgleich und planparallel zu dieser verläuft. Zumindest ein zum Teil aus Holz bestehendes Bauelement 1 mit einem bevorzugt aus metallischen Werkstoffen bestehenden Anschlußteil 47 weist bevorzugt mehrere in die Vertiefungen 7 vorragende Vorsprünge 48 auf, die in eine zumindest teilweise mit den Vertiefungen 7 überlappende Lage verbracht wird, welche im Verbindungselement 2 angeordnet bzw. in diesem eingebettet sind bzw. vollflächig von diesem umhüllt werden. Ein zwischen den Vorsprüngen 48 bemessener Abstand korrespondiert mit einem zwischen den Spitzen der Vertiefungen 7 bemessenen Abstand. Möglich ist natürlich auch die Verbindung der Vorsprünge 48 und des Bauelementes 1 mit über zumindest einem senkrecht zu den Vorsprüngen 48 ausgerichteten Bolzen, der die Bohrungen der Vorsprünge 48 durchragt und zusammen mit dem Verbindungselement 2 eine zusätzliche Anhebung der Tragfähigkeit ermöglicht. Zweckmäßig ragt in einem zwischen den Vorsprüngen 48 gebildeten Hohlraum 13 zumindest ein Keilzinken 19. Daher wird der Hohlraum 13 durch zumindest einen Anschlußteil 47 und mehreren Keilzinken 19 und durch das Verschließen der in Längsrichtung der Vertiefungen 7 senkrechten Öffnungen gebildet.

Das mit einem oder mehreren Vorsprüngen 48 ausgestattete Bauelement 46 kann zur Verbesserung der Verteilung bzw. des Fließverhaltens des Materials mit Durchtrittsöffnungen, Aussparungen etc. ausgestattet werden. Natürlich können die das Verstärkungselement 14 bildenden Vorsprünge 48 auch mit oberflächenvergrößernden konstruktiven Maßnahmen, wie beispielsweise durch das Ausgestalten von einem meanderförmigen, schlangenförmigen Querschnittverlauf oder durch das Anbringen von Profilierungen, Sicken etc. ausgestattet werden.

Für die Befestigung der Vorsprünge 48 mit dem Bauelement 46 können alle aus dem Stand der Technik bekannten Fügeverfahren, wie beispielsweise Schweißen, Löten etc., insbesondere Schweißen, angewandt werden. Das zumindest einen Anschlußteil 47 aufweisende Bauelement 1 kann mit jeder beliebigen Tragkonstruktion, insbesondere einer Stahl- und/oder Betonkonstruktion, die ebenfalls einen Anschlußteil aufweist, verbunden werden. Auf diese Weise ist es möglich, beispielsweise ein Tragwerk aus einer beliebigen Variation aus Stahlträgern, Holzträgern etc. miteinander zu verbinden, was insbesondere dann von Vorteil ist, wenn die architektonische Attraktivität einer aus Holz bestehenden Rahmen- bzw. Hallenkonstruktion nicht verlorengehen soll.

Wie in der Fig. 7 weiters dargestellt, sind die Bauelemente 1 gegengleich ausgebildet und in ihrer Lage zueinander ausgerichtet und stumpf aneinandergelegt. An einer gemeinsamen Verbindungsfläche 49 werden die Bauelemente 46 über lösbare und/oder unlösbare Verbindungselemente 50 in Verbindung gebracht. Natürlich kann das Verbindungselement 50 beispielsweise durch Schnellverschlußelemente, insbesondere Klick-Stoß-Elemente, gebildet sein. Eine derartige Ausbildung hat den Vorteil, daß die Vorfertigung des einen Anschlußteil 47 aufweisenden Bauelementes 1 in einer Produktionsstätte möglich ist, sodaß auf der Baustelle ausschließlich eine Verbindung mehrerer vorgefertigter Bauelemente 1 zu erfolgen hat. Auf diese Weise kann ein ungehinderter Transport mehrerer voneinander getrennter, zumeist großvolumiger Bauelemente 1 problemlos über weite Strecken durchgeführt werden, deren Endmontage vor Ort an der Baustelle durchgeführt werden kann. Zwischen den beiden gegenüberliegenden Anschlußteilen 47 können natürlich Positionier- und/oder Zentrierelemente 51, wie beispielsweise Positionierstifte, Anschlagelemente und dgl. angeordnet werden, die das Ausrichten der Lage der beiden Bauelemente 1 wesentlich vereinfacht.

Die Anschlußteile 47 verlaufen im gezeigten Ausführungsbeispiel im wesentlichen ebenflächig mit den Schmalseitenflächen und den rechtwinkelig zu diesen verlaufenden Breitseitenflächen 32. Die einander zugewandten, zweckmäßig gleichartig ausgebildeten Anschlußteile 47 weisen zumindest quer zur Belastungsrichtung - gemäß Pfeil a - Fortsätze 52 auf, die mit einer von dem dem Fortsatz gegenüberliegenden Anschlußteil 47 gebildeten Rücksetzung 53 korrespondieren. Die sich an Stützflächen 54 der Rücksetzungen 53 abstützenden Fortsätze 52 erstrecken sich zwischen den beiden gegenüberliegenden Breitseitenflächen 32 der Bauelemente 46, wodurch eine gegenseitige Abstützung der zueinander ausgerichteten Anschlußteile 47 und eine optimale Kräfteaufteilung der voneinander getrennt angeordneten Verbindungselementen 2 erreichbar ist. Nachdem die Bauelemente 1 zueinander ausgerichtet und positioniert worden sind, können die Anschlußteile 47 bzw. die Bauelemente 1 mit bevorzugt im Bereich der Fortsätze 52 und Rücksetzungen 53 angeordneten Verbindungselementen 50, zweckmäßig in einer senkrecht zur Schmalseitenfläche ausgerichteten Achse miteinander verbunden werden. Natürlich besteht auch die Möglichkeit, die Anschlußplatten 47 gegenüber den Schmalseitenflächen und den Breitseitenflächen 32 geringfügig vertieft anzuordnen, wodurch die Möglichkeit geschaffen wird, beispielsweise Verkleidungsplatten zur allseitigen Abdeckung des Verbindungsbereiches 4 anzubringen.

Eine andere, nicht weiters dargestellte Ausführungsvariante besteht darin, daß die Anschlußplatten 47 die Breitseiten und/oder Schmalseiten der Bauelemente 1 überragen und der diese überragende Überstand mit dem Anschlußteil 47 zumindest eines weiteren Bauelementes, beispielsweise einem Stahlträger etc., verbindbar ist. Der einen im wesentlichen einen Flansch ausbildende Anschlußteil 47 des zumindest zum Teil aus Holz bestehende Bauelementes 1 kann insbesondere eine Verbindung mit einem Fundament etc. einfach herstellen. Natürlich können die Anschlußteile 46 in die Stütz- und/oder Verbindungsfläche 33 vertieft angeordnet werden, sodaß diese zumindest bereichsweise von dem Holz der Bauelemente 1 umschlossen ist. Die Anschlußteile 47 können gegebenenfalls als ebenflächige oder abgewinkelte oder dgl. Platte ausgebildet werden.

Selbstverständlich ist es auch möglich, daß die Vertiefungen 7 von den Keilzinken 19 nur teilweise umschlossen sind und gewissermaßen mit dem Bauelement 46 einen einzigen gemeinsamen Hohlraum 13 bilden, in dem das Material für ein einstückiges Verbindungselement 2 eingebracht wird, wie dies insbesondere auch in der Fig. 6 bereits dargestellt worden ist. Natürlich besteht auch die Möglichkeit, daß mehrere Vertiefungen 7 einen gemeinsamen Hohlraum 13 bilden, der durch Keilzinken 19 in mehrere voneinander getrennte bzw. gruppierte Hohlräume 13 unterteilt wird.

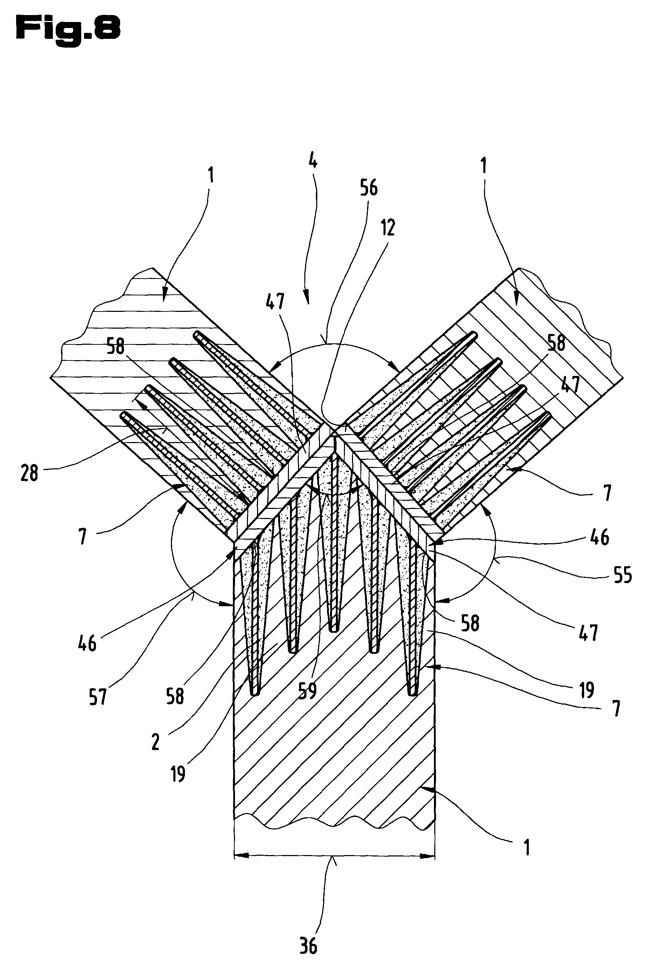

In der Fig. 8 ist eine weitere Ausführungsvariante, insbesondere ein aus mehreren Bauelementen 1 bestehendes Rahmeneck für Hallenkonstruktionen, gezeigt, die ausgehend von dem Verbindungsbereich 4 mehrere winkelig auseinanderlaufende Bauelemente 1 aufweist. Ein zwischen zwei benachbarten Bauelementen 1 eingeschlossener Zentrumswinkel 55, 56, 57 kann zwischen 90° und 180° bzw. 0° betragen. Werden beispielsweise die Zentrumswinkel 55 und 57 mit einem Winkel von 90 Grad ausgebildet, beträgt der Zentrumswinkel 56 180°, sodaß die miteinander in Verbindung gebrachten Bauelemente 1 einen im wesentlichen T-förmigen Querschnitt aufweisen. Auf diese Weise sind durch das Verbinden mehrerer Bauelemente 1 beispielsweise Rahmenecken, Längsverbindungen oder Tragwerkskonstruktionen herstellbar. Wie in dieser Ausführung beispielhaft dargestellt, weist zumindest ein Bauelement 1 im Verbindungsbereich 4 an einer mit weiteren Bauelementen 1 zu verbindenden, diesen zugewandten Stirnseite 12 zwei in Richtung der Bauelemente 1 geneigt aufeinander zulaufende Stütz- und/oder Verbindungsflächen 58 auf, welchen ein Anschlußteil 47 zugeordnet ist. Die in Stütz- und/oder Verbindungsflächen 58 vertieft angeordneten Vertiefungen 7 werden von Keilzinken 19 zumindest teilweise umgrenzt. Bevorzugt wird die rechtwinkelig zur Stütz- und/oder Verbindungsfläche 58 bemessene Tiefe 28 aller Vertiefungen 7 gleichmäßig ausgebildet. Das der Stütz- und/oder Verbindungsfläche 58 zugeordnete Bauelement 46 kann als einteiliger abgekanteter oder mehrteiliger ebenflächiger, miteinander verbundener Anschlußteil 47 ausgebildet werden, dessen in die Vertiefung 7 vorragenden Vorsprünge 48 in eine zumindest teilweise mit den Vertiefungen 7 überlappenden Lage gebracht werden, welche von dem Material des Verbindungselementes 2 vollflächig umhüllt werden. Der beispielsweise einteilige Anschlußteil 47 des mit zwei geneigt verlaufenden Stütz- und/oder Verbindungsflächen 58 ausgebildeten Bauelementes 1 wird beispielsweise mit zwei weiteren, mit Anschlußteilen 47 ausgestatteten Bauelementen 1 verbunden. Diese beiden Bauelemente 1 können ebenfalls beispielsweise über einen gemeinsamen einteilig gefertigten Anschlußteil 47 verbunden sein oder die Bauelemente 1 bilden jeweils einen eigenen Anschlußteil 47 aus, der mit dem Anschlußteil 47 des weiteren Bauelementes 1 lösbar oder unlösbar verbindbar ist. Bevorzugt verlaufen die Stütz- und/oder Verbindungsflächen 58 der mit einem weiteren Bauelement 1 zu verbindenden Bauelemente 1 parallel zueinander. In Abhängigkeit von der Belastung der Tragkonstruktion ist eine Variierung eines zwischen den Stütz- und/oder Verbindungsflächen 58 eingeschlossenen Zentrumswinkels 59 möglich. Durch eine Vergrößerung des Zentrumswinkels 59 und unter Beibehaltung der Breite 36 kann die Oberfläche der Stütz- und/oder Verbindungsfläche 58 ohne zusätzliche bauliche Maßnahmen vergrößert werden, wodurch die Anzahl der die Belastung aufnehmenden Vertiefungen 7 mit den darin befindlichen tragenden Verbindungselementen 2 angehoben werden kann. Wie bereits aus dieser beispielhaften Ausführungsvariante hervorgeht, ist jede beliebige Variation bzw. Anordnung mehrerer miteinander zu verbindender Bauelemente 1 möglich, die hohe Belastungen, wie beispielsweise Gewichts- oder Zug- oder Druck- oder Verdrehspannungen oder Momente und/oder Vergleichsspannungen mit dem erfindungsgemäßen Verbindungselement 2 aufnehmen bzw. ableiten kann.

In der Fig. 9 ist eine weitere Ausführungsvariante einer durch mehrere Bauelemente 1 gebildeten Verbindung gezeigt, die in einem Verbindungsbereich 4 zumindest eine Vertiefung 7 mit zumindest schräg zum Faserverlauf 26 - wie nicht weiters dargestellt - verlaufenden Seitenflächen 10 ausbildet. Bevorzugt bilden jeweils zwei miteinander verbundene Bauelemente 1 eine Längsverbindung aus, die, wie in diesem Ausbildungsbeispiel dargestellt, senkrecht aufeinander ausgerichtet sind. Natürlich besteht auch die Möglichkeit, in einer zur Zeichenebene senkrechten Ebene weitere Bauelemente 1 im Verbindungsbereich 4 der beiden z.B. Längsverbindungen anzuordnen. Die Tragkonstruktion wird beispielsweise an einem auf einer Aufstandsfläche 60 abstützenden Fundament 61, insbesondere mit dem einen Anschlußteil 47 ausbildenden Bauelement 46 befestigt. In der einfachsten Form kann das Befestigungsmittel 62 durch eine Schraubverbindung gebildet werden. Es ist dabei auch jegliches andere Befestigungsmittel 62 aus dem Stand der Technik für die Befestigung der Tragkonstruktion mit dem Fundament 61, das beispielsweise als Betonsockel ausgebildet ist, verwendbar. Möglich ist natürlich auch die Verbindung der größtenteils aus Holz gebildeten Tragkonstruktion mit einer eine Anschlußplatte ausbildenden Stahlkonstruktion, Mauerwerkkonstruktion etc. Die parallel zu der Aufstandsfläche 60 verlaufenden und in Längserstreckung dessen in einem Abstand 63 zueinander distanziert positionierten Bauelemente 1 bilden zusammen mit den senkrecht zur Aufstandsfläche 60 ausgerichteten und in einem Abstand 64 distanzierten Bauelementen 1 den Hohlraum 13 für das mehrere Bauelemente 1 verbindende Verbindungselement 2 aus. Die mit den geöffneten Bereichen 11 einander zugewandten Vertiefungen 7 werden zumindest teilweise von den die Länge 35 aufweisenden Keilzinken 19 umgrenzt. Bevorzugt ist die Breite 36 der Bauelemente 1 größer bemessen, als ein zwischen Stirnflächen 65 zweier einander gegenüberliegender Bauelemente 1 gemessener Abstand 63; 64. Die zumindest teilweise im Bereich der Stirnseiten 12 ineinandergreifenden Bauelemente 1 weisen in einem einander zugewandten stirnseitigen Überlappungsbereich 66, bevorzugt im Randbereich der beiden gegenüberliegenden Schmalseitenflächen Führungs- und Stützflächen 67 auf. Der Abstand zweier einander gegenüberliegender Führungs- und Stützflächen 67 ist geringfügig kleiner bemessen als ein Abstand 63 zweier einander gegenüberliegender Stütz- und/oder Verbindungsflächen 58, wodurch die Bauelemente 1 in ihrer gewünschten Lage einfach zueinander ausgerichtet und positioniert werden können. Natürlich können die Keilzinken 19 auch die Stirnflächen 65 überragen.

Zumindest ein im Verbindungselement 2 angeordnetes, vom Verbindungselement 2 vollflächig umhülltes Verstärkungselement 14 ragt über zumindest einem Teil der Vertiefungen 7 vor und bildet eine versteifte Verbindung mehrerer Bauelemente 1.

Mehrere in Vertiefungen 7 der Bauelemente 1 ragende Vorsprünge des ausgehärteten Verbindungselementes 2 sind mit den formgebenden Vertiefungen 7 formschlüssig verbunden, wodurch eine derartige, mit zumindest einem Verbindungselement 2 gebildete Verbindung eine hohe Verdrehfestigkeit aufweist. Das mit den Oberflächen 25 der Vertiefungen 7 der Bauelemente 1 verbindbare Verbindungselement 2 wird mit dieser und/oder mit mehrerer Fasern 24 - wie nicht weiters dargestellt - über Anformen bzw. Anhaften und/oder Eindringen des flüssigen oder pastösen Materials des Verbindungselementes 2 verbunden, wodurch die zu einer Tragkonstruktion verbundenen Bauelemente 1 einer hohen Zug- und/oder Druck- und/oder Biegebeanspruchung ausgesetzt werden können. Außerdem ist durch das Einbringen eines Verstärkungselementes 14 in das Verbindungselement 2 eine zusätzliche Anhebung der Verformungsfestigkeit des Verbindungselementes 2 bedingt durch die Bildung einer vernetzten Struktur erreichbar. Natürlich kann auch ein im Querschnitt rechteckförmiger, quadratischer etc. Formkörper mit in Vertiefungen 7 vorragende Stege 38 eingesetzt werden.

Verfahren zum Verbinden mehrerer Bauelemente:

Im nachfolgenden wird die Herstellung einer aus mehreren Bauelementen 1 bestehenden Bauteileverbindung detailliert dargestellt. Die mit einer vorbestimmbaren Länge, Breite und Höhe sowie auf eine bestimmte relative Feuchte getrockneten Bauelemente 1, insbesondere Holzbauteile 3, die in einer zu deren Längserstreckung senkrechten Ebene einen im wesentlichen rechteckförmigen oder quadratischen etc. Querschnitt aufweisen, werden in der Werkstatt mit den im Verbindungsbereich zu versehenen Profilierungen bzw. Vertiefungen 7 vorgefertigt. Die miteinander verbundenen, zumindest zum Teil aus Holz bestehenden Bauelemente 1 weisen in einem Verbindungsbereich 4 zumindest eine nutartige, fingerartige, zahnartige etc. Profilierung bzw. Vertiefung 7 mit zumindest schräg zum Faserverlauf 26 verlaufenden Seitenflächen 10 auf, wobei die den Winkel 23 und eine Tiefe 28 aufweisenden Vertiefungen 7 beispielsweise mit Formfräser, Scheibenfräser etc. hergestellt werden. Insbesondere die Verwendung von beispielsweise in einem Produktions-Planungs-System integrierten, numerisch gesteuerten Werkzeugmaschinen mit hohe Fertigungsgenauigkeiten ermöglicht kurze Durchlaufzeiten der herzustellenden Bauelemente 1. Die sich nach dem Fräsen ergebenden Oberflächen 25 unterliegen keiner weiteren Bearbeitung, da geringfügige Toleranzabweichungen und/oder Oberflächenrauhigkeiten und/oder Risse etc. keine Auswirkung auf die Qualität der tragenden Verbindung, insbesondere der Verbindung des Verbindungselementes 2 mit Bauelementen 1, haben.

Im nächsten Arbeitsschritt werden die zumindest im Verbindungsbereich 4 von Holzspänen gereinigten Bauelemente 1 mit ihren geöffneten Bereichen 11 der Vertiefungen 7 oder mit ihren Stirnseiten 12 einander zugewendet, aneinandergelegt und in deren gewünschten Lage zueinander ausgerichtet. Um Verlagerungen der zueinander positionierten Bauelemente 1 zu verhindern, werden diese in deren ausgerichteten Lage fixiert. Mit dem im Verbindungsbereich 4 zwischen Bauelementen 1 gebildeten Hohlraum 13 wird zumindest ein Verstärkungselement 14, wie beispielsweise ein metallischer Werkstoff, ein Gewebe oder Gewirke aus hochfestem Material oder zumindest ein Abstandhalter 22 positioniert eingelegt, worauf eine im Verbindungsbereich 4 der Breitseitenfläche 32 und/oder Schmalseitenfläche ausgebildete Öffnung beispielsweise mit einer Verkleidung und/oder Verkleidungsplatten und/oder Manschetten und dgl. verschlossen wird. Natürlich ist es auch möglich, daß das Verstärkungselement 14 die Verkleidung und/oder Verkleidungsplatten ausbildet, die vor dem Befüllen des Hohlraumes abgewinkelt werden. Nach dem allseitigen Umschließen des Hohlraumes 13 wird dieser gegebenenfalls evakuiert und darauffolgend Material eingebracht, wobei der Unterdruck zumindest bis zu einem voreinstellbaren Grad der Aushärtung aufrechterhalten werden kann. Natürlich können die die Öffnung verschließenden lösbaren und/oder unlösbaren Verkleidungen, Verkleidungsplatten, Manschetten etc. nach dem Befüllen des Hohlraumes 13 mit dem Material für das Verbindungselement 2 nach erfolgter, zumindest bereichsweiser Aushärtung entfernt werden. Selbstverständlich ist es auch möglich, im Verbindungsbereich 4 die Verkleidung, die Verkleidungsplatten oder die Manschette etc. in den Schmalseitenflächen und/oder Breitseitenflächen 32 vertieft anzuordnen und dort zu belassen. Die aus Kunststoff oder Metall bestehenden Verkleidungen, Verkleidungsplatten, Manschetten können natürlich jede beliebige Ausgestaltung in bezug auf Optik oder technische Merkmale annehmen. Die Verwendung insbesondere transparenter Verkleidungen, Verkleidungsplatten ermöglicht eine Kontrolle während der Befüllung des Hohlraumes 13 mit dem Material für das Verbindungselement 2. Durch eine Sichtkontrolle kann die Qualität des Verbindungselementes 2 und/oder das Fließverhalten etc. weitgehend beurteilt werden. In vorteilhafter Weise ist für das Verbindungselement 2 ein Material zu verwenden, das während der Aushärtung einen gasbildenden Bestandteil freisetzt, der aufquellt oder gegebenenfalls aufschäumt, wodurch die Fertigungstoleranzen und/oder Risse im Verbindungsbereich 4 keine einschränkende Auswirkungen auf die Tragfähigkeit bzw. Belastung der Verbindung des Verbindungselementes 2 mit den Bauelementen 1 bewirken. Auf diese Weise können einerseits Toleranzen in der Fertigung der Vertiefungen 7 und/oder Risse etc. ausgeglichen werden und andererseits kann ein gegebenenfalls unzulässiges Schwinden des Verbindungselementes 2 vermieden werden.

Das Ausfüllen bzw. Einbringen des Materials des Verbindungselementes 2 in den Hohlraum 13 kann beispielsweise mittelbar über die senkrecht zur Länge der Vertiefungen 7 ausgerichteten Öffnungen und/oder unmittelbar mit Injektionsnadel erfolgen. Natürlich besteht auch die Möglichkeit, daß das Material über zumindest eine Angußbohrung in einen oder mehrere Hohlräume 13 und/oder Gruppen von Hohlräumen 13 eingebracht wird, wobei einem oder mehreren Hohlräumen 13 und/oder Gruppen von Hohlräumen 13 beispielsweise zumindest eine weitere Bohrung zugeordnet ist, über welche das überschüssige Material und/oder Sauerstoff aus dem Hohlraum 13 abgeleitet werden kann. Die zumindest schräg zu Seitenflächen 10 der Vertiefungen 7 verlaufende Angußbohrung und dieser gegenüberliegend angeordnete weitere Bohrung ragen bevorzugt in einen der Hohlräume 13 der Vertiefungen 7, wobei das unter Druck gesetzte Material über die Angußbohrung in die Vertiefung 7 eingebracht wird. Natürlich können für die Einbringung des Materials alle anderen aus dem Stand der Technik bekannten Methoden verwendet werden.

Allgemein ist es vorteilhaft, daß das Material für das Verbindungselement 2 vor dem Einbringen in den Hohlraum 13 zur Verbesserung des Fließverhaltens erwärmt wird, wodurch das insbesondere flüssige Material auch Haarrisse ausfüllen kann bzw. ist dadurch auch eine gute Benetzung der Oberflächen 25 der Vertiefungen 7 möglich. Von weiterem Vorteil dabei ist, daß durch das Erwärmen vor allem auch das Herstellen einer Verbindung bei niedrigen Umgebungstemperaturen möglich ist. Der Aushärtevorgang des Materials für das Verbindungselement 2 kann durch das Einbringen einer Wärmequelle und/oder durch das Beaufschlagen des Verstärkungselementes 14 beispielsweise mit einer hohen Frequenz oder Mikrowellentechnik beschleunigt werden. Selbstverständlich ist es auch möglich, durch Vibrationsbeaufschlagung der zueinander positioniert gehaltenen Bauelemente 1 das Auslaufen bzw. Verteilen des Materials für die Herstellung des Verbindungselementes 2 zu verbessern.

Die Herstellung der Verbindung bzw. des Verbindungselementes 2 kann beispielsweise unmittelbar vor Ort an der Baustelle und/oder in einer Produktionsstätte erfolgen. Dadurch sind die zumeist mit hohen Kosten verbundenen umständlichen Transporte der bereits zusammengefügten Bauelemente 1 und die für den Transport geltenden hohen Sicherheitsmaßnahmen vermeidbar, da nunmehr die Möglichkeit besteht, einzelne voneinander getrennte, vorgefertigte Bauelemente 1 einfach zu transportieren, deren Weiterverarbeitung, insbesondere das Herstellen des Verbindungselementes 2 zwischen Bauelementen 1, im Baustellenbereich erfolgt. Natürlich können die insbesondere in den Fig. 7 und 8 gezeigten Ausführungsbeispiele bereits mit dem in einer Fertigungsstätte gefertigten Verbindungselement 2 transportiert werden, wobei diese fertigen Bauelemente 1 nur noch zu einer Tragkonstruktion zusammenzusetzen sind.

Der Ordnung halber sei abschließend darauf hingewiesen, daß zum besseren Verständnis der erfindungsgemäßen Verbindung diese bzw. deren Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Vor allem können die einzelnen in den Fig. 1; 2; 3; 4; 5; 6; 7; 8; 9 gezeigten Ausführungen und Maßnahmen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Bauelement
- 2: Verbindungselement
- 3: Holzbauteil
- 4: Verbindungsbereich
- 5: Ende
- 6: Ende
- 7: Vertiefung
- 8: Faserrichtung
- 9: Fügefläche
- 10: Seitenfläche
- 11: Bereich
- 12: Stirnseite
- 13: Hohlraum
- 14: Verstärkungselement
- 15: Kunstharz
- 16: Faserverstärkung
- 17: Bewehrung
- 18:
- 19: Keilzinke
- 20: Stoßfuge
- 21: Stoßfugenabschnitt
- 22: Abstandhalter
- 23: Winkel
- 24: Faser
- 25: Oberfläche
- 26: Faserverlauf
- 27: Grenzflächenbereich
- 28: Tiefe
- 29: Schichte
- 30: Deckschichte
- 31: Zwischenschichte
- 32: Breitseitenfläche
- 33: Stütz- und/oder Verbindungsfläche
- 34: Länge
- 35: Länge
- 36: Breite
- 37:
- 38: Steg
- 39: Quersteg
- 40: Öffnung
- 41:
- 42:
- 43:
- 44:
- 45:
- 46: Bauelement
- 47: Anschlußteil
- 48: Vorsprung
- 49: Verbindungsfläche
- 50: Verbindungselement
- 51: Positionier- und Zentrierelement
- 52: Fortsatz
- 53: Rücksetzung
- 54: Stützfläche
- 55: Zentrumswinkel
- 56: Zentrumswinkel
- 57: Zentrumswinkel
- 58: Stütz- und/oder Verbindungsfläche
- 59: Zentrumswinkel
- 60: Aufstandsfläche
- 61: Fundament
- 62: Befestigungsmittel
- 63: Abstand
- 64: Abstand
- 65: Stirnfläche
- 66: Überlappungsbereich
- 67: Führungs- und Stützfläche

## Patentansprüche

1. Verfahren zum Verbinden mehrerer Bauelemente, von welchen zumindest eines zum Teil aus Holz besteht, bei welchen in einem Verbindungsbereich zumindest eine nutartige Vertiefung mit zumindest schräg zum Faserverlauf bzw. Faserrichtung verlaufenden Seitenflächen hergestellt wird, worauf die beiden Bauelemente in ihrer gewünschten Lage zueinander ausgerichtet und der geöffnete Bereich der Vertiefung dann zumindest einem weiteren Bauelement zugewendet wird oder Stirnseiten der Bauelemente aneinandergelegt werden, dadurch gekennzeichnet, daß die nutartige Vertiefung (7) in ihrer Längsrichtung im Bereich von Schmalseiten des Bauelementes (1) durch Öffnungen begrenzt ist und diese zumindest teilweise verschlossen und wenigstens ein dadurch gemeinsam mit den Bauelementen (1) gebildeter Hohlraum (13) danach mit Material zur Herstellung zumindest eines Verbindungselementes (2) gefüllt wird, welches gleichzeitig über Anformung an und/oder Eindringen in die Oberfläche (25) der Vertiefung (7) der Bauelemente (1) und/oder eine Oberfläche eines Vorsprunges (48) und eines Anschlußteiles (47) während der Herstellung des Verbindungselementes (2) mit den Bauelementen (1) kraft- und/oder formschlüssig verbunden wird.

2. Verfahren nach Anspruch 1, dadurch gekennzeichnet, daß vor dem Herstellen des Verbindungselementes (2) wenigstens ein sich von zumindest einer Vertiefung (7) des einen Bauelementes (1) in zumindest eine Vertiefung (7) eines anderen Bauelementes (1) erstreckendes Verstärkungselement (14) angeordnet wird.

3. Verfahren nach Anspruch 1 oder 2, dadurch gekennzeichnet, daß vor dem Herstellen des Verbindungselementes (2) ein sich von dem Anschlußteil (47) des einen Bauelementes (46) in zumindest eine Vertiefung (7) eines anderen Bauelementes (1) erstrekkendes Verstärkungselement (14) angeordnet wird.

4. Verfahren nach einem oder mehreren der vorhergehenden Ansprüche, dadurch gekennzeichnet, daß das Verstärkungselement (14) zwischen den beiden Bauelementen (1; 46) zumindest über einen Teil der Länge der Vertiefung (7) angeordnet wird.

5. Verfahren nach einem oder mehreren der vorhergehenden Ansprüche, dadurch gekennzeichnet, daß die beiden Bauelemente (1) so aufeinander ausgerichtet werden, daß sie sich im Bereich der Stirnseiten (12) zumindest teilweise überlappen.

6. Verfahren nach einem oder mehreren der vorhergehenden Ansprüche, dadurch gekennzeichnet, daß sich die Vertiefungen (7) oder die Vertiefung (7) und das Verstärkungselement (14) im Verbindungsbereich (4) der Stirnseiten (12) der Bauelemente (1) zumindest teilweise überlappen.

7. Verfahren nach einem oder mehreren der vorhergehenden Ansprüche, dadurch gekennzeichnet, daß das Material für das Verbindungselement (2) in flüssiger oder pastöser Form eingebracht wird.

8. Verfahren nach einem oder mehreren der vorhergehenden Ansprüche, dadurch gekennzeichnet, daß der durch die Bauelemente (1) und die im Verbindungsbereich (4) angeordnete Verkleidung umgrenzte Hohlraum (13) vor dem Einbringen des Materials evakuiert wird.

9. Verfahren nach einem oder mehreren der vorhergehenden Ansprüche, dadurch gekennzeichnet, daß der Verbindungsbereich (4) mit einer eine Öffnung zwischen den Bauelementen (1) verschließenden Manschette umgeben wird, der durch die Manschette und die Vertiefung (7) gebildete Hohlraum (13) danach evakuiert und darauffolgend das Material in den Hohlraum (13) eingebracht wird und der Unterdruck zumindest bis zu einer aus einem voreinstellbaren Grad der Aushärtung aufrecht erhalten wird bzw. die Manschette positioniert angeordnet bleibt.

10. Verfahren nach einem oder mehreren der vorhergehenden Ansprüche, dadurch gekennzeichnet, daß das Material unter Druck in dem Hohlraum (13) eingebracht wird.

11. Verfahren nach einem oder mehreren der vorhergehenden Ansprüche, dadurch gekennzeichnet, daß das Material vor dem Einbringen in dem Hohlraum (13) erwärmt wird.

12. Verfahren nach einem oder mehreren der vorhergehenden Ansprüche, dadurch gekennzeichnet, daß das bereits im Hohlraum (13) eingebrachte Material erwärmt wird.

13. Verfahren nach einem oder mehreren der vorhergehenden Ansprüche, dadurch gekennzeichnet, daß das fließfahige Material und/oder ein oder mehrere Bauelemente (1; 46) während der Aushärtung vibrationsbeaufschlagt werden.

14. Verfahren nach einem oder mehreren der vorhergehenden Ansprüche, dadurch gekennzeichnet, daß im Bereich der Öffnungen der Vertiefung (7) Ausnehmungen vorgesehen werden, in die bevorzugt Verkleidungsplatten eingesetzt werden, worauf der zwischen den Verkleidungsplatten und den Vertiefungen (7) gebildete Hohlraum (13) mit dem Material des Verbindungselementes (2) ausgefüllt wird.

15. Verfahren nach einem oder mehreren der vorhergehenden Ansprüche, dadurch gekennzeichnet, daß die Verkleidungsplatten transparent ausgebildet werden.

16. Verfahren nach einem oder mehreren der vorhergehenden Ansprüche, dadurch gekennzeichnet, daß ein ein Bauelement (46) bildender, aus metallischen Werkstoffen bestehender Anschlußteil (47) mit in die Vertiefung (7) vorragende Vorsprünge (48) in eine zumindest teilweise mit der Vertiefung (7) überlappenden Lage gebracht wird, worauf das Material des Verbindungselementes (2) eingebracht wird.

17. Verfahren nach einem oder mehreren der vorhergehenden Ansprüche, dadurch gekennzeichnet, daß die Bauelemente (1) im Bereich der Vertiefung (7) mit über deren Seitenflächen (10) vorragenden Abstandhaltern (22) versehen werden.

18. Verfahren nach einem oder mehreren der vorhergehenden Ansprüche, dadurch gekennzeichnet, daß sich die Abstandhalter (22) bevorzugt nur über einen Teil der Länge und/oder Tiefe (28) der Vertiefungen (7) erstrecken.

19. Verfahren nach einem oder mehreren der vorhergehenden Ansprüche, dadurch gekennzeichnet, daß die Vertiefungen (7) in bezug auf eine Stütz- und/oder Verbindungsfläche (33) zwischen den beiden Bauelementen (1) spiegelbildlich zueinander angeordnet sind.

20. Verfahren nach einem oder mehreren der vorhergehenden Ansprüche, dadurch gekennzeichnet, daß zumindest eines der Bauelemente (1; 46) Bestandteil einer Tragkonstruktion eines Bauwerks ist.

21. Verfahren nach einem oder mehreren der vorhergehenden Ansprüche, dadurch gekennzeichnet, daß Seitenflächen (10) der Vertiefung (7) unter einem Winkel (23) von kleiner 14° zur Längsrichtung der Fasern (28) geneigt sind.

22. Verfahren nach einem oder mehreren der vorhergehenden Ansprüche, dadurch gekennzeichnet, daß Seitenflächen (10) der Vertiefung (7) unter einem Winkel (23) von 3° bis 9°, bevorzugt 5° bis 8°, zur Längsrichtung der Fasern (28) geneigt sind.

23. Verfahren nach einem oder mehreren der vorhergehenden Ansprüche, dadurch gekennzeichnet, daß die Vertiefung (7) in einem etwa V-förmigen Querschnitt mit Abrundung an der Spitze ausgebildet ist.

24. Verfahren nach einem oder mehreren der vorhergehenden Ansprüche, dadurch gekennzeichnet, daß die Vertiefung (7) mit einem annähernd trapezförmigen Querschnitt ausgebildet ist.

25. Verfahren nach einem oder mehreren der vorhergehenden Ansprüche, dadurch gekennzeichnet, daß die Vertiefung (7) mit einem annähernd konkaven oder konvexen Querschnitt ausgebildet ist.

26. Verfahren nach einem oder mehreren der vorhergehenden Ansprüche, dadurch gekennzeichnet, daß die Oberfläche (25) der Vertiefung (7) bzw. der Vertiefungen (7) um das zumindest 5, bevorzugt das 6 bis 10-fache, insbesondere um das 8,2-fache, größer ausgebildet ist, als eine sich zwischen Breitseitenflächen (32) und Schmalseitenflächen senkrecht oder schräg erstreckende Oberfläche der endseitigen Stirnseite (12).

27. Verfahren nach einem oder mehreren der vorhergehenden Ansprüche, dadurch gekennzeichnet, daß die Holzbauteile (3) auf eine materialverträgliche relative Feuchte von etwa 8 bis 15% vorher getrocknet werden.

28. Verfahren nach einem oder mehreren der vorhergehenden Ansprüche, dadurch gekennzeichnet, daß das Material während der Aushärtung einen gasbildenden Bestandteil freisetzt, der aufquellt.

29. Verfahren nach einem oder mehreren der vorhergehenden Ansprüche, dadurch gekennzeichnet, daß das Material einen Kriechanteil kleiner 4% aufweist.

30. Verfahren nach einem oder mehreren der vorhergehenden Ansprüche, dadurch gekennzeichnet, daß das oder die ein- oder mehrteiligen Verbindungselemente (2) der Bauelemente (1) mehreren Vertiefungen (7) mit sich in diese zumindest über einen Teilbereich erstreckenden ein- oder mehrteiligen Verstärkungselemente (14) zugeordnet sind.

31. Verfahren nach einem oder mehreren der vorhergehenden Ansprüche, dadurch gekennzeichnet, daß ein oder mehrere Hohlräume (13) und/oder Gruppen von Hohlräumen (13) gemeinsam oder getrennt voneinander mit Material befüllt werden.

32. Verbindungselement für mehrere Bauelemente, von denen zumindest einer zum Teil aus Holz besteht, welches zumindest einen Vorsprung zum Eingriff in zumindest eine Vertiefung der Bauelemente aufweist und mit diesen verbunden ist, dadurch gekennzeichnet, daß das Verbindungselement (2) aus einem Kunststoff besteht und über Anformen bzw. Anhaften und/oder Eindringen mit einer Oberfläche (25) der Vertiefung (7) der Bauelemente (1) verbunden ist und der Kunststoff zumindest eine gleich hohe Zug- und/oder Druck- und/oder Biege- und/oder Verdrehfestigkeit aufweist wie das zum Teil aus Holz bestehende Bauelement (1).

33. Verbindungselement nach Anspruch 32, dadurch gekennzeichnet, daß sich die nutartigen Vertiefungen (7) zumindest über einen Teil der Länge und Höhe der Bauelemente (1) zwischen den zueinander distanziert verlaufenden Schmalseitenflächen erstrecken.

34. Verbindungselement nach Anspruch 32 oder 33, dadurch gekennzeichnet, daß sich die nutartigen Vertiefungen (7) zumindest über einen Teil der Länge und Breite (36) der Bauelemente (1) zwischen den zueinander distanziert verlaufenden Breitseitenflächen (32) erstreckt.

35. Verbindungselement nach einem der Ansprüche 32 bis 34, dadurch gekennzeichnet, daß wenigstens eine der die Länge des Bauelementes (1) begrenzende Stütz- und/oder Verbindungsfläche (33) geneigt oder senkrecht zur Schmalseitenfläche und Breitseitenfläche (32) verläuft.

36. Verbindungselement nach einem der Ansprüche 32 bis 35, dadurch gekennzeichnet, daß die Verkleidungsplatten sich über eine Länge des Bauelementes erstrecken, die geringfügig größer ist als eine Tiefe (28) der Vertiefungen (7).

37. Verbindungselement nach einem der Ansprüche 32 bis 36, dadurch gekennzeichnet, daß im Verbindungselement (2) zumindest ein Verstärkungselement (14) angeordnet bzw. in diesem eingebettet ist.

38. Verbindungselement nach einem der Ansprüche 32 bis 37, dadurch gekennzeichnet, daß das Verstärkungselement (14) vom Verbindungselement (2) vollflächig umhüllt ist.

39. Verbindungselement nach einem der Ansprüche 32 bis 38, dadurch gekennzeichnet, daß das Verstärkungselement (14) im Verbindungselement (2) in den Vorsprung vorragt.

40. Verbindungselement nach einem der Ansprüche 32 bis 39, dadurch gekennzeichnet, daß das Verstärkungselement (14) zwischen dem Bauelement (1) und dem Anschlußteil (47) angeordnet ist und in zumindest eine Vertiefung (7) des zumindest zum Teil aus Holz bestehenden anderen Bauelementes (1) ragt.

41. Verbindungselement nach einem der Ansprüche 32 bis 40, dadurch gekennzeichnet, daß zumindest ein Verstärkungselement (14) über einen Teilbereich des Verbindungselementes (2), insbesondere einem Vorsprung, vorragt.

42. Verbindungselement nach einem der Ansprüche 32 bis 41, dadurch gekennzeichnet, daß das Verstärkungselement (14) aus einem metallischen Werkstoff gebildet wird.

43. Verbindungselement nach einem der Ansprüche 32 bis 42, dadurch gekennzeichnet, daß das Verstärkungselement (14) aus einem Nichteisenwerkstoff, insbesondere einem Gewebe oder Gewirke aus hochfesten Materialien, wie beispielsweise Glasfasern, Kohlefasern, Aramidfasern oder dgl., gebildet wird.

44. Verbindungselement nach einem der Ansprüche 32 bis 43, dadurch gekennzeichnet, daß das ein Verstärkungselement (14) ausbildende Bauelement (46) zumindest einen Vorsprung (48) ausbildet.

45. Verbindungselement nach einem der Ansprüche 32 bis 44, dadurch gekennzeichnet, daß mehrere Abstandhalter (22) in Richtung der Länge der Vertiefung (7) distanziert voneinander angeordnet sind.

46. Verbindungselement nach einem der Ansprüche 32 bis 45, dadurch gekennzeichnet, daß das Verstärkungselement (14) mit zumindest einem Quersteg (39) und mehreren mit diesem verbundenen Stegen (38) gebildet ist.

47. Verbindungselement nach einem der Ansprüche 32 bis 46, dadurch gekennzeichnet, daß das Verstärkungselement (14), insbesondere der Quersteg (39) und die Stege (38), mehrere Öffnungen (40) ausbildet.

48. Einstückiger Bauteil aus mehreren Bauelementen, von welchen zumindest einer zum Teil aus Holz besteht, die in ihrem Verbindungsbereich im Bereich ihrer aneinanderliegenden Flächenbereiche mit in das jeweilige Bauelement hineinreichenden Vertiefungen versehen ist, dadurch gekennzeichnet, daß ein Verbindungselement (2) in die Vertiefungen (7) hineinragt und über Anformen bzw. Anhaften an und/oder Eindringen in die Oberfläche (25) im Bereich der Vertiefung (7) beider Bauelemente (1) form- und/oder kraftschlüssig verbunden ist.

49. Verwendung von Kunstharz für die Herstellung eines last- und/oder momentenübertragenden Verbindungselementes (2).

50. Verbindung mehrerer Holzbauteile, die an ihren zu verbindenden Enden eine Profilierung, insbesondere eine Keilzinkenprofilierung, aufweisen und über einander gegenüberliegende, unter einem vorgegebenen Winkel geneigte Fügeflächen verklebt sind, dadurch gekennzeichnet, daß die Fügeflächen (9) zur Bildung zumindest eines Hohlraumes (13) zur Aufnahme wenigstens eines Verbindungselementes (2) einander mit Abstand gegenüberliegen und der Hohlraum (13) zur Herstellung des Verbindungselementes (2) mit Kunstharz (15) ausgegossen wird und eine kraft- und/oder reibschlüssige Verbindung zwischen den Bauelementen (1) mit dem Verbindungselementes (2) ausbildet.

51. Verfahren zum Herstellen einer Klebeverbindung mehrerer Holzbauteile, die an ihren zu verbindenden Enden eine Keilzinkenprofilierung mit einander gegenüberliegenden, unter einem vorgegebenen Flankenwinkel geneigten Fügeflächen hergestellt werden, worauf die die beiden Enden der Bauelemente in ihrer gewünschten Lage zueinander ausgerichtet und die geöffneten Bereiche der Vertiefung aufeinander zugewendet oder ihre Stirnseiten aneinandergelegt werden und während einer Mindestabbindezeit für den Klebstoff in deren gegenseitigen Lage festgehalten werden, dadurch gekennzeichnet, daß zunächst die Enden (5, 6) der Holzbauteile (3) unter Freilassung eines Hohlraumes (13) zwischen den Fügeflächen (9) der ineinandergreifenden Keilzinken (19) zusammengefügt werden und in welchem unter Beibehaltung des Fügeflächenabstandes zur Herstellung eines Verbindungselementes (2) Kunstharz (15) als Klebstoff zur kraft- und/oder formschlüssigen Verbindung zwischen den Bauelementen (1) und dem Verbindungselement (2) eingebracht wird.

52. Verbindung zweier Holzbauteile, die an ihren zu verbindenden Enden eine Profilierung, insbesondere eine Keilzinkenprofilierung, aufweisen und über einander gegenüberliegende, unter einem vorgegebenen Flankenwinkel geneigte Fügeflächen verklebt sind, dadurch gekennzeichnet, daß die Fügeflächen (9) einander mit Abstand gegenüberliegen und daß die sich zwischen den Fügeflächen (9) ergebende Stoßfuge (20) mit einem Kunstharz (15) ausgegossen ist.

53. Verbindung nach Anspruch 52, dadurch gekennzeichnet, daß zwischen den Fügeflächen (9) der beiden Enden (5, 6), die mit ihren gegeneinander auf Lücke versetzten Keilzinken (19) ineinandergreifen, in das Kunstharz (15) eingegossene Abstandhalter (22) vorgesehen sind.

54. Verbindung nach Anspruch 52, dadurch gekennzeichnet, daß die Keilzinken (19) der beiden Enden (5, 6) stumpf aneinanderstoßen und die einzelnen sich zwischen den Fügeflächen (9) ergebenden, im Querschnitt rautenförmigen Stoßfugenabschnitte (21) eine in das Kunstharz eingegossene Bewährung (17) aufweisen.

55. Verbindung nach Anspruch 52, dadurch gekennzeichnet, daß die Bewährung (17) aus in die Stoßfugenabschnitte (21) eingesetzte Metallplatten besteht.

56. Verfahren zum Herstellen einer Klebeverbindung zweier Holzbauteile, die an ihren zu verbindenden Enden eine Keilzinkenprofilierung mit einander gegenüberliegenden, unter einem vorgegebenen Flankenwinkel geneigten Fügeflächen aufweisen und nach einem Zusammenfügen dieser Enden während einer Mindestabbindezeit für den Klebstoff in ihrer gegenseitigen Lage festgehalten werden, dadurch gekennzeichnet, daß zunächst die Enden der Holzbauteile unter Freilassung einer Stoßfuge zwischen den Fügeflächen der ineinandergreifenden Keilzinken zusammengefügt werden und daß dann die Stoßfuge unter Beibehaltung des Fügeflächenabstandes mit einem Kunstharz als Klebstoff ausgegossen wird.

57. Verfahren nach Anspruch 56, dadurch gekennzeichnet, daß die zu verbindenden Enden der Holzbauteile unter Zwischenschaltung von Abstandhaltern zwischen den Fügeflächen aneinandergefügt werden und daß die Abstandhalter in das Kunstharz eingegossen werden.

58. Verfahren zum Herstellen einer Klebeverbindung zweier Holzbauteile, die an ihren zu verbindenden Enden eine Keilzinkenprofilierung mit einander gegenüberliegenden, unter einem vorgegebenen Flankenwinkel geneigten Fügeflächen aufweisen und nach einem Zusammenfügen dieser Enden während einer Mindestabbindezeit für den Klebstoff in ihrer gegenseitigen Lage festgehalten werden, dadurch gekennzeichnet, daß zunächst die Enden der Holzbauteile mit stumpf aneinanderstoßenden Keilzinken zusammengefügt werden und daß dann in die einzelnen sich zwischen den Fügeflächen ergebenden, im Querschnitt rautenförmigen Stoßfugenabschnitte eine plattenförmige Bewährung eingesetzt wird, bevor die Stoßfugenabschnitte mit einem Kunstharz als Klebstoff ausgegossen werden.

59. Verfahren nach Anspruch 58, dadurch gekennzeichnet, daß die Bewährung zur Aushärtung des in die Stoßfugenabschnitte eingegossenen Kunstharzes erwärmt werden.
